# EUROPÄISCHE PATENTSCHRIFT

(11) **EP 2 437 097 B1**
(45) Veröffentlichungstag und Bekanntmachung des Hinweises auf die Patenterteilung: **31.01.2024**
(21) Anmeldenummer: 11182904.0
(22) Anmeldetag: 27.09.2011
(51) Int. Cl.: G02B 21/36, G02B 27/58

(54) **Mikroskopsystem, Mikroskopieverfahren und Computerprogrammprodukt**
Microscope system, microscopy method and computer program product
Système de microscope, procédé de microscopie et produit de programme informatique

(30) Priorität: 30.09.2010 DE 102010041794
(43) Veröffentlichungstag der Anmeldung: 04.04.2012
(73) Patentinhaber: Carl Zeiss Microscopy GmbH, 07745 Jena (DE)
(72) Erfinder: Kuppig, Stephan, 07745 Jena (DE); Kleppe, Ingo, 07745 Jena (DE); Kalkbrenner, Thomas, 07745 Jena (DE); Novikau, Yauheni, 07745 Jena (DE)
(74) Vertreter: Kraus & Weisert Patentanwälte PartGmbB

(56) Entgegenhaltungen:
- EP-A1- 1 308 715
- EP-A2- 1 341 023
- WO-A2-2006/127692
- US-A1- 2006 239 534
- Jochen Tham: "Mikroskopie Aktuell", , 31. Oktober 2005 (2005-10-31), Seiten 1-4, XP55020103, Gefunden im Internet: URL:http://www.zeiss.de/C12567BE00472A5C/E mbedTitelIntern/MikroskopieAktuelldeutsch- 01-2005/$File/Mikroskopie_Aktuell_1_05.pdf [gefunden am 2012-02-23]
- Friedhelm Viereck ET AL: "Sleuthing the Virus ... Widefield Image Acquisition and Analysis", BIOforum Europe 4/2007 Vol. 11, 1. April 2007 (2007-04-01), Seiten 78-79, XP55020179, Darmstadt, Germany Gefunden im Internet: URL:http://www.zeiss.de/C12567BE00472A5C/E mbedTitelIntern/Article_Sleuthing_the_Viru s_AxioVision/$File/Sleuthing_the_Virus.pdf [gefunden am 2012-02-23]
- Anonymous: "ApoTome - Auf einmal sieht alles anders aus", , 1. Mai 2005 (2005-05-01), Seiten 1-20, XP55020195, Göttingen Gefunden im Internet: URL:http://www.fli-leibniz.de/pdfs/Apotome _d.pdf [gefunden am 2012-02-23]
- Anonymous: "Takeoff Guide AxioVision", , 1. Juni 2009 (2009-06-01), Seiten 1-49, XP55020183, Göttingen, Deutschland Gefunden im Internet: URL:http://www.zeiss.de/C12567BE00472A5C/E mbedTitelIntern/AxioVisionTakeOffGuideRel. 4.8German/$File/AxioVision48_TakeoffGuide_ German.pdf [gefunden am 2012-02-23]
- PETER KNER ET AL: "Super-resolution video microscopy of live cells by structured illumination", NATURE METHODS, Bd. 6, Nr. 5, 26. April 2009 (2009-04-26), Seiten 339-342, XP55020126, ISSN: 1548-7091, DOI: 10.1038/nmeth.1324
- HESS S T ET AL: "Ultra-High Resolution Imaging by Fluorescence Photoactivation Localization Microscopy", BIOPHYSICAL JOURNAL, BIOPHYSICAL SOCIETY, US, Bd. 91, Nr. 11, 1. Dezember 2006 (2006-12-01), Seiten 4258-4272, XP002523343, ISSN: 0006-3495, DOI: 10.1529/BIOPHYSJ.106.091116 [gefunden am 2008-11-08]
- MATTHIAS F. LANGHORST ET AL: "Structure brings clarity: Structured illumination microscopy in cell biology", BIOTECHNOLOGY JOURNAL, Bd. 4, Nr. 6, 1. Juni 2009 (2009-06-01), Seiten 858-865, XP55020115, ISSN: 1860-6768, DOI: 10.1002/biot.200900025
- Klaus Weisshart ET AL: "Strukturierte Beleuchtung in der Hochauflösungsmikroskopie", Optik & Photonik, 30. April 2010 (2010-04-30), Seiten 40-45, XP55020113, Weinheim Gefunden im Internet: URL:http://www.wiley-vch.de/berlin/journal s/op/10-01/OP1001_S40-S45.pdf [gefunden am 2012-02-23]

## Beschreibung

Die vorliegende Erfindung betrifft ein Mikroskopsystem, ein Mikroskopieverfahren und ein Computerprogrammprodukt für ein Mikroskopsystem. Insbesondere betrifft die vorliegende Erfindung derartige Systeme und Verfahren, mit denen in einer mehrere Schritte umfassenden Prozedur zunächst Rohdaten gewonnen und diese dann rechnerisch weiterverarbeitet werden.

Während Mikroskopie seit geraumer Zeit zur Beobachtung organischer und nicht organischer Materialien in einer Vielzahl von Anwendungen eingesetzt wird, war die mit Lichtmikroskopen erreichbare Auflösung über lange Zeit beugungsbegrenzt.

Erst in jüngerer Vergangenheit wurden Methoden entwickelt, die eine hochauflösende Mikroskopie mit einer Auflösung erlauben, die deutlich kleiner als die Beugungsgrenze ist. Beispiele für derartige Methoden beinhalten Methoden, bei denen eine strukturierte Beleuchtung des Objekts eingesetzt wird, oder Lumineszenzmikroskopiemethoden, bei denen die Lokalisierung von Objekten mit hoher Genauigkeit erfolgt. Ein Überblick über derartige Methoden wird in L. Schermelleh et al., "A guide to super-resolution fluorescence microscopy", J. Cell Biol. 190(2): 165 (2010) gegeben. Beispiele für derartige Verfahren sind auch in der EP 1 157 297 B1 oder in der DE 10 2006 021 317 B3 beschrieben. Mit derartigen Verfahren wurden Lokalisierungsgenauigkeiten im Bereich einiger bis einiger zehn Nanometer berichtet. Methoden, mit denen hochauflösende Lumineszenzmikroskopie auch zur dreidimensionalen Bildgebung eingesetzt werden kann, sind in den deutschen Patentanmeldungen DE 10 2009 043 744.4 mit dem Titel "Verfahren und Mikroskop zur dreidimensionalen auflösungsgesteigerten Mikroskopie", DE 10 2009 060 490.1 mit dem Titel "Hochauflösendes Mikroskop und Bildteileranordnung" und DE 10 2009 060 793.5 mit dem Titel "Hochauflösendes Mikroskop und Verfahren zur zwei- oder dreidimensionalen Positionsbestimmung von Objekten" der Anmelderin beschrieben. "Mikroskopie Aktuell", veröffentlicht im Internet unter der URL http://www.zeiss.de/C12567BE00472A5C/EmbedTitellntern/MikroskopieAktuelldeutsch-01-2005/$File/Mikroskopie_Aktuell_1_05.pdf, beschreibt ein Mikroskopsystem mit einer integrierten Visualisierungssoftware, die einen schnellen Wechsel zwischen Ansichten der Probe ermöglicht. Weiterhin können komprimierte Animationen zur Präsentation errechnet werden.

Zahlreichen Mikroskopieverfahren, mit denen eine Auflösung weit jenseits der Beugungsgrenze erzielt werden kann, ist die Komplexität der Datenerfassung und Datenverarbeitung gemeinsam. So wird typischerweise zur Datenaufnahme nicht nur eine, sondern eine relativ große Anzahl von 2D-Aufnahmen des Objekts erfasst, aus denen durch rechnerische Weiterverarbeitung Bilddaten des Objekts gewonnen werden. So kann beispielsweise bei Methoden unter Einsatz einer strukturierten Objektbeleuchtung ein Beleuchtungsmuster in unterschiedlichen Orientierungen eingesetzt und jeweils eine oder sogar mehrere 2D-Aufnahmen erfasst werden, wobei durch rechnerische Verarbeitung aus den in den unterschiedlichen 2D-Aufnahmen enthaltenen Informationen ein Bild des Objekts erzeugt wird. Bei hochauflösender Lumineszenzmikroskopie können optisch schaltbare oder optisch aktivierbare Moleküle eingesetzt werden. Aufgrund der Forderung, dass bei jeder Aufnahme die detektierbaren Moleküle nicht zu dicht beieinander liegen dürfen, wird für jedes der Einzelbilder nur ein geringer Anteil der Moleküle in einen detektierbaren Zustand geschaltet. Eine hohe Anzahl von Einzelbildern, beispielsweise 10 000 - 20 000 Einzelbilder, ist häufig erforderlich, um die Einzelbilder rechnerisch zu einer möglichst kompletten Wiedergabe des untersuchten Objekts zusammenführen zu können.

Um bei derartigen hochauflösenden Verfahren die Auflösung der durch rechnerische Verarbeitung von Rohdaten erhaltenen Bilddaten zu erhöhen, können benutzerdefiniert verschiedene Einstellgrößen angepasst werden. Beispiele für derartige Einstellgrößen beinhalten bei Verfahren mit strukturierter Beleuchtung das Beleuchtungsmuster (z.B. die Periodizität des Musters) oder die Anzahl von unterschiedlichen Orientierungen des Beleuchtungsmusters, für die Einzelbilder aufgenommen werden. Weitere Beispiele für derartige Einstellgrößen beinhalten bei Verfahren zur Lumineszenzmikroskopie eine Fitmaske, die bei der rechnerischen Auswertung eines Einzelbildes zur Lokalisierung von Lumineszenzereignissen eingesetzt wird, oder ein Spektrum und eine Intensität von Umschaltsignalen. Für Verfahren, bei denen Einzelbilder für unterschiedliche Objektebenen erfasst werden können, kann eine Einstellgröße die Lage der Objektebenen, beispielsweise in Axialrichtung des Mikroskops, beinhalten. Weitere Beispiele für Einstellgrößen beinhalten die Charakteristik von Filtern, die zur Filterung von Daten im Orts- oder Fourierraum eingesetzt werden können.

Aufgrund der Komplexität der Prozedur, die der Datenaufnahme und Datenverarbeitung zugrunde liegt, kann es für einen Benutzer schwierig sein, die Bedeutung der verschiedenen Einstellgrößen für das zugrundeliegende Verfahren zu verstehen. Derartige Kenntnisse wären für den Benutzer insbesondere zu einem Zeitpunkt wichtig, zu dem Werte für einstellbare Parameter für die Durchführung eines Experiments bzw. die weitere Verarbeitung erfasster Rohdaten am Mikroskop festgelegt wird.

Eine gewisse Hilfestellung können dabei Verfahren bieten, die an tatsächlich erfasste Daten oder an in einem Speicher abgelegte Beispieldaten illustrieren, wie sich die Veränderung einer Einstellgröße auf das Endresultat der Datenverarbeitung auswirkt. Ein Beispiel für ein derartiges Verfahren ist in der DE 10 2007 046 469 A1 beschrieben. Während die Durchführung einer Datenverarbeitung mit aktuell eingestellten Werten für verschiedenen Einstellgrößen dem Benutzer helfen kann, für die gerade untersuchte Struktur geeignete Einstellungswerte zu finden, vermittelt sie ihm keinerlei Information über das zugrundeliegende Verfahren. Gerade derartige Informationen würden es aber einem Benutzer erlauben, die Bedeutung der verschiedenen Einstellgrößen zu verstehen und bei der Datenaufnahme und Datenverarbeitung an einer neuen Struktur zu nutzen. Darüber hinaus ist es für die Simulation der Wirkung von Einstellgrößen darauf, wie das durch Datenverarbeitung erhaltene Bild aussieht, erforderlich, dass bereits Rohdaten aufgenommen wurden. Somit sind derartige Informationen nur eingeschränkt für die Planung einer Datenaufnahme hilfreich. Insbesondere in Fällen, in denen die Datenaufnahme an einer Probe nur einmal durchgeführt werden kann, beispielsweise weil während einer Lumineszenzmikroskopiemessung Moleküle irreversibel geschaltet werden, ist es für einen Benutzer jedoch wünschenswert, auch vor einer Datenaufnahme ein besseres Verständnis für die Wirkung der verschiedenen Einstellgrößen zu erhalten.

"CONFOCAL APPLICATION LETTER - reSOLUTION - LAS AF APPLICATION WIZARD - FRET SENSITIZED EMISSION" (Leica Microsystems), No. 20, September 2006, beschreibt ein FRET-Mikroskopieverfahren, bei welchem Parameter über eine grafische Oberfläche ("Wizard") eingestellt werden können.

Aufgabe der Erfindung ist es, ein Mikroskopsystem, ein Mikroskopieverfahren und ein Computerprogrammprodukt anzugeben, die einen Benutzer bei der Planung einer Datenaufnahme unterstützen. Aufgabe ist es insbesondere, derartige Systeme oder Verfahren anzugeben, die einem Benutzer auch bei einer komplexen Prozedur zur Datenaufnahmen, die eine größere Anzahl von Schritten umfassen kann, Informationen über die Wirkung verschiedener Einstellgrößen geben kann.

Erfindungsgemäß werden ein Mikroskopsystem gemäß Anspruch 1, ein Mikroskopieverfahren gemäß Anspruch 9 und ein Computerprogrammprodukt gemäß Anspruch 10 angegeben. Die abhängigen Ansprüche definieren weitere Ausführungsformen.

Das erfindungsgemäße Mikroskopsystem umfasst ein Mikroskop zur Datenaufnahme, das wenigstens eine steuerbare Komponente aufweist, und eine Recheneinrichtung. Die Recheneinrichtung ist eingerichtet, um die wenigstens eine steuerbare Komponente des Mikroskops bei der Datenaufnahme zu steuern und/oder um von dem Mikroskop bereitgestellte Rohdaten zu verarbeiten. Das Mikroskopsystem kann so eingerichtet sein, dass zur Datenaufnahme eine Mehrzahl von Schritten umfassende Prozedur abgearbeitet wird. Das Mikroskop und die Recheneinrichtung sind eingerichtet, um die Datenaufnahme abhängig von für eine Mehrzahl von Einstellgrößen jeweils eingestellten Werten durchzuführen. Das Mikroskopsystem umfasst eine optische Ausgabeeinrichtung, die mit der Recheneinrichtung gekoppelt ist. Die Recheneinrichtung ist eingerichtet, um abhängig von einer benutzerdefiniert ausgewählten Einstellgröße selektiv Grafikdaten über die optische Ausgabeeinrichtung auszugeben, die der ausgewählten Einstellgröße zugeordnet sind und einen Einfluss der ausgewählten Einstellgröße auf wenigstens einen Schritt der Prozedur, die der Datenaufnahme zugrunde liegt, repräsentieren.

Ein derartiges Mikroskopsystem erlaubt es, dem Benutzer am Mikroskopsystem Informationen über die Wirkungsweise des zugrundeliegenden Verfahrens zu liefern. Durch die selektive Ausgabe der Grafikdaten abhängig von der gewählten Einstellgröße kann der Benutzer spezifisch Informationen über die Wirkung einzelner Einstellgrößen abfragen. Die Bedienung eines Mikroskopsystems mit einer Mehrzahl von einstellbaren Parametern kann auf diese Weise erleichtert werden.

Die Recheneinrichtung kann eingerichtet sein, um aus einer Mehrzahl von bei der Datenaufnahme gewonnenen Einzelbildern rechnerisch Bilddaten zu ermitteln. In diesem Fall können für wenigstens eine auswählbare Einstellgröße Grafikdaten über die optische Ausgabeeinrichtung ausgegeben werden, die den Einfluss dieser Einstellgröße auf eine der Datenverarbeitung zugrundeliegende Prozedur repräsentieren. Auf diese Weise kann dem Benutzer ein Verständnis der zugrundeliegenden Algorithmik der Datenverarbeitung vermittelt werden.

Das Mikroskopsystem kann eine Eingabeeinrichtung aufweisen, mit der ein Benutzer den Wert der verschiedenen Einstellgrößen anpassen kann. Die Recheneinrichtung kann so eingerichtet sein, dass sie die Einstellgröße, die von dem Benutzer zur Anpassung des Werts der Einstellung gewählt ist, automatisch auch als die ausgewählte Einstellgröße festlegt, für die die zugeordneten Grafikdaten auszugeben sind. Auf diese Weise kann dem Benutzer Information über diejenige Einstellgröße bereitgestellt werden, deren Wert aktuell angepasst werden soll.

Die Recheneinrichtung kann eingerichtet sein, um die Grafikdaten als Antwort auf eine Benutzereingabe anzupassen. Auf diese Weise wird eine Interaktion ermöglicht, die dem Benutzer weitere Informationen über die ausgewählte Einstellgröße liefert.

Die Recheneinrichtung ist eingerichtet, um die Grafikdaten abhängig von einem für die ausgewählte Einstellgröße eingestellten Wert über die optische Ausgabeeinrichtung auszugeben. Es kann eine adaptive Anpassung der Grafikdaten erfolgen, wenn der Benutzer den für die ausgewählte Einstellgröße eingestellten Wert ändert. Auf diese Weise wird es dem Benutzer zusätzlich erleichtert, den Wert zu identifizieren, der für eine nachfolgende Datenaufnahme geeignet ist.

Die Recheneinrichtung kann eingerichtet sein, um die Grafikdaten weiterhin abhängig von einem für eine von der ausgewählten Einstellgröße verschiedene Einstellgröße eingestellten Wert auszugeben. Auf diese Weise können Zusammenhänge zwischen verschiedenen Einstellgrö-ßen berücksichtigt werden. Beispielsweise können Grafikdaten, die einen abdeckbaren Fourierraum bei Einsatz strukturierter Beleuchtung veranschaulichen, sowohl abhängig von dem eingestellten Wert für die Periode der strukturierten Beleuchtung als auch abhängig von dem eingestellten Wert für die Anzahl unterschiedlicher Orientierungen des Beleuchtungsmusters generiert und angezeigt werden.

Die Recheneinrichtung kann eingerichtet sein, um Grafikdaten für wenigstens eine benutzerdefiniert ausgewählte Einstellgröße vor der Datenaufnahme auszugeben. Auf diese Weise kann die Durchführung der nachfolgenden Datenaufnahme erleichtert werden.

Die Grafikdaten können so erzeugt werden, dass sie verschiedene Informationen an den Benutzer bereitstellen. Bei einer Ausführungsform kann die Recheneinrichtung eingerichtet sein, um die Grafikdaten so zu erzeugen, dass sie einen Einfluss der ausgewählten Einstellgröße auf eine bei der Durchführung der Datenaufnahme erzielbare Geschwindigkeit und/oder erzielbare Auflösung und/oder erzielbare Empfindlichkeit repräsentieren. Derartige Informationen können zur Experimentplanung eingesetzt werden. Alternativ oder zusätzlich können die Grafikdaten Informationen über den Verarbeitungsprozess oder Informationen darüber, welche Schritte durch die ausgewählte Einstellgröße beeinflusst werden, beinhalten. Mit den Grafikdaten können Informationen über den Einfluss eines Filters oder einer Fitmaske bei der Datenverarbeitung bereitgestellt werden. Mit den Grafikdaten können Informationen über den Einfluss eines Beleuchtungsmusters für eine strukturierte Beleuchtung bereitgestellt werden. Mit den Grafikdaten können Informationen über den Einfluss einer Belichtungszeit oder Leistungsdichte eines Umschaltsignals für ein Verfahren unter Verwendung optisch schaltbarer oder optisch aktivierbarer Moleküle, beispielsweise eines PALM-Verfahrens ("Photo Activated Localization Microscopy") bereitgestellt werden. Mit den Grafikdaten können Informationen über ein Entmischen von Aufnahmekanälen bereitgestellt werden.

Falls bereits Rohdaten aufgenommen wurden, können zusätzlich zu den der ausgewählten Einstellgröße zugeordneten Grafikdaten über die Ausgabeeinrichtung weitere grafische Informationen ausgegeben werden, die abhängig von bei der Datenaufnahme erfassten Rohdaten erzeugt werden. Bei einer weiteren Ausführungsform können die erfassten Rohdaten in die ausgegebenen Grafikdaten integriert werden.

Gemäß einer erfindungsgemäßen Variante ist das Mikroskopsystem zur Durchführung einer Datenaufnahme unter Einsatz einer strukturierten Beleuchtung eingerichtet. Dazu kann das Mikroskopsystem eine Einrichtung zum Erzeugen eines Beleuchtungsmusters mit veränderbarer Orientierung umfassen. Wenigstens eine der Einstellgrößen, die zum Ausgeben der zugeordneten Grafikdaten auswählbar ist, ist bei dieser Variante in einer Gruppe enthalten, die umfasst: eine Periodizität eines Beleuchtungsmusters, eine Anzahl unterschiedlicher Orientierungen des Beleuchtungsmusters und eine Filterfunktion zur Filterung aufgenommener Rohdaten.

Gemäß einer weiteren erfindungsgemäßen Variante ist das Mikroskopsystem zur Durchführung eines Mikroskopieverfahrens unter Verwendung optisch aktivierbarer oder optisch schaltbarer Moleküle eingerichtet, beispielsweise zur Durchführung eines PALM-Verfahrens. Hierzu kann das Mikroskopsystem eine Quelle für ein Umschaltsignal umfassen. Wenigstens eine der Einstellgrößen, die zum Ausgeben der zugeordneten Grafikdaten auswählbar ist, ist bei dieser Variante enthalten in einer Gruppe, welche umfasst: eine Maskengröße für einen Fitvorgang zur Lokalisierung eines Moleküls, ein Spektrum eines Umschaltsignals und eine Intensität des Umschaltsignals. Die Grafikdaten können beispielsweise die Größe der Fitmaske in Bezug auf erfasste Rohdaten repräsentieren. Die Grafikdaten können auch den Einfluss des Spektrums oder der Intensität des Umschaltsignals auf Übergangswahrscheinlichkeiten eines verwendeten Farbstoffes repräsentieren. Diese Information kann in Form von Jablonski-Diagrammen dargestellt werden.

Das Mikroskopsystem kann zur Durchführung eines Mikroskopieverfahrens unter Verwendung optisch aktivierbarer oder optisch schaltbarer Moleküle eingerichtet sein. Hierzu kann das Mikroskopsystem eine Quelle für ein Umschaltsignal umfassen. Das Mikroskopsystem kann weiterhin eingerichtet sein, um die Datenaufnahme für mehrere beabstandete Objektebenen durchzuführen. Das Mikroskop kann eine Komponente zum Einstellen der Lage der Objektebenen aufweisen. Die Komponente zum Einstellen der Lage von Objektebenen kann beispielsweise eine verstellbare Linse oder eine verstellbare Anordnung von Mikrolinsen umfassen. Alternativ oder zusätzlich kann die Komponente zum Einstellen der Lage von Objektebenen ein Bildteilerelement umfassen, das verschiedene Anteile des Detektionslichtes über unterschiedliche Wege führt, deren optische Weglängendifferenz einstellbar ist und zum Festlegen der Objektebenen gesteuert wird. Die Recheneinrichtung kann eingerichtet sein, um abhängig von einer eingestellten Lage der Objektebenen die Grafikdaten so zu erzeugen, dass sie einen Einfluss der Lage der Objektebenen auf einen Messbereich und/oder eine erzielbare Auflösung in Axialrichtung des Strahlengangs repräsentieren.

Bei dem erfindungsgemäßen Mikroskopieverfahren werden Rohdaten erfasst und anschließend rechnerisch verarbeitet, wobei eine Datenaufnahme abhängig von für eine Mehrzahl von Einstellgrößen eingestellten Werte durchgeführt wird. Die Datenaufnahme kann in einer eine Mehrzahl von Schritten umfassenden Prozedur erfolgen. Abhängig von einer benutzerdefiniert ausgewählten Einstellgröße der Mehrzahl von Einstellgrößen werden selektiv Grafikdaten über eine optische Ausgabeeinrichtung ausgegeben, die der ausgewählten Einstellgröße zugeordnet sind und einen Einfluss der ausgewählten Einstellgröße auf wenigstens einen Schritt der Prozedur, die der Datenaufnahme zugrunde liegt, repräsentieren.

Vorteilhafte Weiterbildungen des Mikroskopieverfahrens sind entsprechend den Weiterbildungen des Mikroskopsystems ausgebildet.

Das Mikroskopieverfahren kann unter Verwendung des Mikroskopsystems nach einem Aspekt oder Ausführungsbeispiel durchgeführt werden.

Nach einem weiteren Aspekt der Erfindung wird ein Computerprogrammprodukt mit einer Folge von darauf gespeicherten Steuerbefehlen angegeben, die bei Ausführung durch eine Recheneinrichtung eines Mikroskopsystems das Mikroskopsystem zur Durchführung des Verfahrens nach einem Aspekt oder Ausführungsbeispiel veranlassen.

Systeme und Verfahren nach Ausführungsbeispiel können eingesetzt werden, um komplexe Mikroskopieverfahren durchzuführen. Insbesondere können Systeme und Verfahren nach Ausführungsbeispiel bei Verfahren eingesetzt werden, bei denen eine Mehrzahl von Einzelbildern aufgenommen und daraus rechnerisch Bilddaten ermittelt werden.

Ausführungsbeispiele werden unter Bezugnahme auf die beigefügte Zeichnung näher erläutert.
Fig. 1 ist eine schematische Darstellung eines Mikroskopsystems nach einem Ausführungsbeispiel.
Fig. 2 ist eine schematische Darstellung eines Mikroskopsystems nach einem weiteren Ausführungsbeispiel.
Fig. 3-5 zeigen schematisch eine grafische Benutzeroberfläche eines Mikroskopsystems nach einem Ausführungsbeispiel.
Fig. 6 zeigt schematisch eine grafische Benutzeroberfläche eines Mikroskopsystems nach einem weiteren Ausführungsbeispiel.
Fig. 7 zeigt schematisch eine grafische Benutzeroberfläche eines Mikroskopsystems nach einem weiteren Ausführungsbeispiel.
Fig. 8 und 9 zeigen schematisch eine grafische Benutzeroberfläche eines Mikroskopsystems nach einem weiteren Ausführungsbeispiel.
Fig. 10 illustriert die Arbeitsweise eines Mikroskopsystems zur dreidimensionalen Lumineszenzbildgebung.
Fig. 11 zeigt schematisch eine grafische Benutzeroberfläche eines Mikroskopsystems nach einem weiteren Ausführungsbeispiel.
Fig. 12 und 13 zeigen schematisch eine grafische Benutzeroberfläche eines Mikroskopsystems nach einem weiteren Ausführungsbeispiel.
Fig. 14 und 15 zeigen schematisch eine grafische Benutzeroberfläche eines Mikroskopsystems nach einem weiteren Ausführungsbeispiel.
Fig. 16 und 17 zeigen schematisch eine grafische Benutzeroberfläche eines Mikroskopsystems zur Durchführung einer Lumineszenzmikroskopiemessung nach einem weiteren Ausführungsbeispiel.
Fig. 18 zeigt schematisch eine grafische Benutzeroberfläche eines Mikroskopsystems zur Durchführung einer Lumineszenzmikroskopiemessung nach einem weiteren Ausführungsbeispiel.
Fig. 19 zeigt schematisch eine grafische Benutzeroberfläche eines Mikroskopsystems zur Durchführung einer Lumineszenzmikroskopiemessung nach einem weiteren Ausführungsbeispiel.

Im Folgenden werden Ausführungsbeispiele der Erfindung näher erläutert. Diese Ausführungsbeispiele sind nicht beschränkend. Während einige Ausführungsbeispiel im Kontext bestimmter Mikroskopietechniken beschrieben werden, beispielsweise im Kontext von Abbildungsverfahren unter Verwendung strukturierter Beleuchtung ("Structured Illumination Microscopy", SIM) und/oder im Kontext von PALM-Techniken, sind Ausführungsbeispiele der Erfindung nicht auf diese Anwendungen beschränkt. Die Merkmale der verschiedenen Ausführungsbeispiele können miteinander kombiniert werden, sofern dies in der nachfolgenden Beschreibung nicht ausdrücklich ausgeschlossen ist.

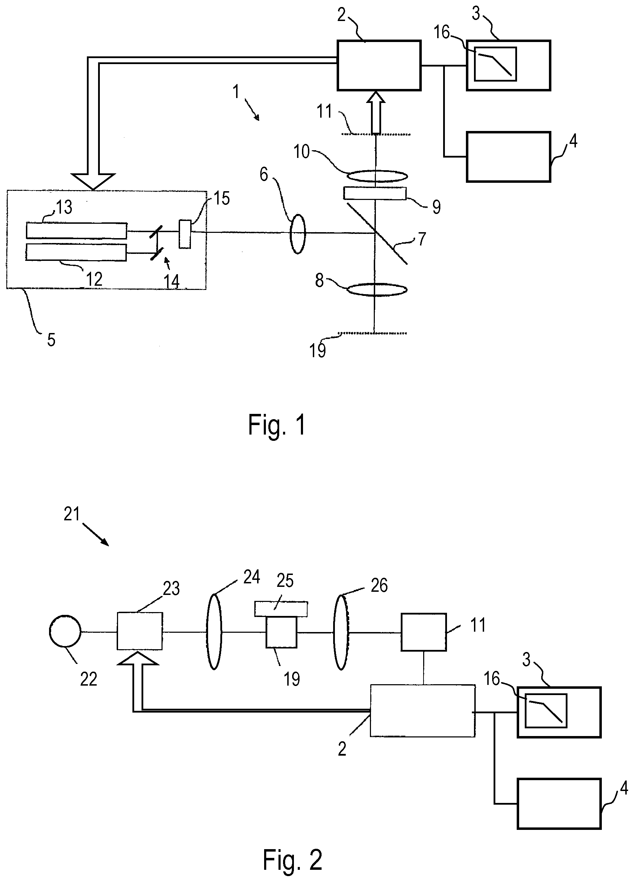

Figur 1 ist eine schematische Darstellung eines Mikroskopsystems 1 nach einem Ausführungsbeispiel. Das Mikroskopsystem 1 weist eine Recheneinrichtung 2 auf, die wenigstens eine Komponente eines Mikroskops steuert und von dem Mikroskop erfasste Einzelbilder rechnerisch weiterverarbeitet. Die Recheneinrichtung 2 ist mit einer optischen Ausgabeeinrichtung 3 gekoppelt, die beispielsweise als Anzeigetafel ausgestaltet sein kann. Wie noch ausführlicher beschrieben werden wird, ist die Recheneinrichtung 2 so eingerichtet, dass sie über die Ausgabeeinrichtung 3 Grafikdaten 16 ausgibt, die dem Benutzer Informationen über das Verfahren liefert, das der Datenaufnahme und optional auch der Datenverarbeitung zugrunde liegt.

Das Mikroskopsystem 1 ist für eine hochauflösende Abbildung einer Probe ausgestaltet, bei der Lumineszenzsignale von optisch aktivierten Molekülen detektiert werden. Beispiele für derartige Verfahren sind in der Technik bekannt als PALM ("Photo Activated Localization Microscopy"), FPALM ("Fluorescence PhotoActivation Localization Microscopy"), STORM ("Stochastic Optical Reconstruction Micropscopy"), SPDM ("Spectral Precision Distance Measurement"), PALMIRA ("PALM with Independetnly Running Acquisition"), GSDIM ("Ground State Depletion and Individual Molecular return") oder dSTORM ("direct STORM"), die mit weiteren Nachweisen in L. Schermelleh et al., "A guide to super-resolution fluorescence microscopy", J. Cell Biol. 190(2): 165 (2010) dargestellt sind.

Das Mikroskop nimmt mehrere Einzelbilder der Probe 19 auf. Die Probe 19 kann beispielsweise mit dem Farbstoff DRONPA (WO 2007/009812 A1) oder mit dem Farbstoff DENDRA (Gurskaya et al., Nature Biotech., Band 24, S. 461-465, 2006) markiert sein. Zur Aktivierung sowie zur Lumineszenzanregung weist das Mikroskop eine Strahlungsquelle 5 auf, die über wenigstens einen Laser 12, 13 verfügt. Im dargestellten Ausführungsbeispiel, bei dem Aktivierungsstrahlung und Lumineszenzanregung unterschiedliche Wellenlängen aufweisen können, verfügt die Strahlungsquelle 5 über zwei Laser 12, 13, deren Ausgangsstrahlen über einen Strahlvereiniger 14 zusammengeführt wird. Die Laser 12 und 13 können beispielsweise bei 405 nm (Aktivierungsstrahlung) und 488 nm (Lumineszenzanregung und Deaktivierung) Strahlung abgeben. Bei Verwendung eines Farbstoffes, bei dem die Aktivierung und Lumineszenzanregung bei derselben Wellenlänge erfolgen kann, genügt ein Laser. Ein Beispiel für einen derartigen Farbstoff ist der erwähnte Farbstoff DENDRA.

Ein optisches Filter 15, beispielsweise ein akustisch-optisches Filter 15, dient zur Wellenlängenselektion und zum schnellen Schalten oder Abschwächen einzelner Laserwellenlängen. Eine Optik 6 fokussiert die Strahlung über einen dichroitischen Strahlteiler 7 in eine Pupille eines Objektivs 8, so dass die Strahlung der Strahlungsquelle 5 als Weitfeldbeleuchtung auf die Probe 19 einfällt.

In der Probe 19 entstehende Lumineszenzstrahlung wird über das Objektiv 8 eingesammelt. Der dichroitische Strahlteiler 7 ist so ausgelegt, dass er die Lumineszenzstrahlung passieren lässt, so dass sie über ein Filter 9 und eine Tubuslinse 10 auf einen Detektor 11 abgebildet wird. Der Detektor 11 kann als Matrix-Detektor ausgestaltet sein, beispielsweise als CCD-Detektor.

Die Recheneinrichtung 2 ist mit dem Mikroskop gekoppelt und erfüllt in dem Mikroskopsystem 1 sowohl Steuerfunktionen als auch Datenverarbeitungsfunktionen. Zur Steuerung des Mikroskops kann die Recheneinrichtung 2 beispielsweise mit der Strahlungsquelle 5 gekoppelt sein, um eine Intensität oder ein Spektrum der zur Optik 6 abgegebenen Strahlung (Aktivierungsstrahlung oder Lumineszenzanregung) zu steuern. Das Mikroskop kann weitere steuerbare Komponenten aufweisen. Beispielsweise kann eine Einrichtung zur Tiefenselektion vorgesehen sein, mit der eine PALM-Datenaufnahme für unterschiedliche Bildebenen erfolgen kann. Bei einer Ausgestaltung kann die Einrichtung zur Tiefenselektion eine räumlich-zeitliche Pulsformung vorzunehmen, um mit Mehr-Photonen-Anregungen eine Tiefenauflösung zu erreichen, wie in D. Oron et al., "Scanningless depth-resolved microscopy", Optics Express 13, 1468 (2005) beschrieben. Andere Ausgestaltungen steuerbarer Komponenten des Mikroskops sind ebenfalls möglich.

Die Recheneinrichtung 2 ist eingerichtet, um aus einer größeren Anzahl von Einzelbildern (beispielsweise 10 000 oder mehr Einzelbilder) Bilddaten des Objekts 19 rechnerisch zu ermitteln. Dazu kann die Recheneinrichtung 2 beispielsweise das aufgenommene Lumineszensignal einer nichtlinearen mathematischen Operation unterziehen, z.B. durch pixelweises Berechnen einer Potenz oder Exponentialfunktion der erfassten Signalintensität, und/oder zur Lokalisierung der Moleküle in den Einzelbildern eine Fitfunktion in Form einer Gaußfunktion an die gemessene Intensitätsverteilung anpassen. Für ein Mikroskop, das für eine 3D-Lumineszenzmikroskopie ausgestaltet ist, kann die Recheneinrichtung 2 weiterhin eine automatische Gruppierung der Molekülbilder vornehmen, um in Einzelbildern, die unterschiedlichen Objektebenen entsprechen, eine Zuordnung von zueinander korrespondierenden Lumineszenzsignalen vorzunehmen.

Die Erzeugung einer Abbildung des Objekts 19 mit dem Mikroskopsystem 1 erfolgt somit in einer relativ komplexen und für den Benutzer regelmäßig nicht detailliert erkennbaren Prozedur. Die Prozedur hängt von verschiedenen benutzerdefiniert einstellbaren Einstellgrößen ab, die beispielsweise die Intensität und das Spektrum der Umschaltsignale für Farbstoffmoleküle der Probe, die Größe der verwendeten Fitmaske oder eine Filterung der Einzelbilder zur Rauschunterdrückung oder dergleichen beinhalten. Werte für diese Einstellgrößen kann der Benutzer über ein Eingabegerät 4 festlegen. Wie noch näher beschrieben wird, kann die Recheneinrichtung 2 automatisch oder auf eine entsprechende Benutzeraktion hin Informationen über die Ausgabeeinrichtung 3 ausgeben, die den Einfluss einer der Einstellgrößen auf die Prozedur darstellt, auf der die Datenaufnahme und optional auch der Datenverarbeitung basiert.

Figur 2 ist eine schematische Darstellung eines Mikroskopsystems 21 nach einem weiteren Ausführungsbeispiel. Komponenten, die in ihrer Ausgestaltung oder Funktion Komponenten des Mikroskopsystems 1 entsprechen, sind mit denselben Bezugszeichen bezeichnet. Das Mikroskopsystem 21 ist für eine hochauflösende Abbildung einer Probe unter Verwendung strukturierter Beleuchtung ausgestaltet.

Das Mikroskopsystem 21 weist eine Beleuchtungseinrichtung 22, mindestens einen Mustergenerator 23, eine Beleuchtungsoptik 24, eine Probenhalterung 25, eine Abbildungsoptik 26 und eine Detektoreinrichtung 11 auf. Die Komponenten 22, 24-26 und 11 können durch optische Bauteile bereitgestellt werden, wie sie aus der Lichtmikroskopie und aus der optischen Mess- und Analysetechnik, z. B. der Spektroskopie, bekannt sind.

Der Mustergenerator 23 ist allgemein eine Einrichtung zur Bildung von Beleuchtungsbedingungen mit einem vor bestimmten räumlichen Muster an dem Objekt 19. Abhängig von der spezifischen Anwendung kann der Mustergenerator 23 eine Maske mit einer bestimmten ein- oder zweidimensionalen Übertragungscharakteristik sein. Die Maske kann beispielsweise durch ein Beugungsgitter oder Phasengitter oder eine Matrixanordnung aus einzeln ansteuerbaren Reflektor- oder Transmissionspixeln gebildet werden. Zur Implementierung des Mustergenerators 23 können beispielsweise DMD-Einrichtungen ("Digital Mirror Device") oder LCD-Matrixanordnungen eingesetzt werden. Der Mustergenerator 23 kann auch eine Spiegelanordnung zur Erzeugung eines Interferenzmusters umfassen. Abweichend von in Fig. 2 dargestellten Anordnung kann der Mustergenerator 23 auch zwischen der Beleuchtungsoptik 24 und dem Objekt 19 oder unmittelbar am Objekt 19 vorgesehen sein.

Die Recheneinrichtung 2 ist eingerichtet, um die Erzeugung verschiedener Muster durch den Mustergenerator 23 zu steuern. Die Recheneinrichtung 2 ist weiterhin zur Rekonstruktion der Objektabbildung aus mehreren Einzelbildern eingerichtet, die von dem Detektor 11 für unterschiedliche Positionen oder Orientierungen des Beleuchtungsmusters erfasst werden. Die Rekonstruktion kann beispielsweise nach der in der EP 1 157 297 B1 beschriebenen Methode oder nach einer anderen geeigneten Methode durchgeführt werden.

Die Erzeugung einer Abbildung des Objekts 19 mit dem Mikroskopsystem 21 erfolgt in einer relativ komplexen Prozedur. Die Prozedur hängt von verschiedenen benutzerdefiniert einstellbaren Einstellgrößen ab, die beispielsweise die Periodizität des Beleuchtungsmusters, die Anzahl unterschiedlicher Orientierungen des Beleuchtungsmusters oder eine Filterfunktion für die Filterung der erfassten Einzelbilder beinhalten. Werte für diese Einstellgrößen kann der Benutzer über ein Eingabegerät 4 festlegen. Wie noch näher beschrieben wird, kann die Recheneinrichtung 2 automatisch oder auf eine entsprechende Benutzeraktion hin Informationen über die Ausgabeeinrichtung 3 ausgeben, die den Einfluss einer der Einstellgrößen auf die Prozedur darstellt, die der Datenaufnahme und optional auch der Datenverarbeitung zugrunde liegt.

Nach Ausführungsformen der Erfindung gibt die Recheneinrichtung 2 eines Mikroskopsystems Informationen an einen Benutzer aus, die den Einfluss verschiedener Benutzereinstellungen auf das der Datenaufnahme und optional auch der Datenverarbeitung zugrunde liegende Verfahren veranschaulichen. Auf diese Weise kann dem Benutzer ein intuitives Verständnis über die Funktionsweise des Mikroskopsystems vermittelt werden. Dies kann zu einem Zeitpunkt geschehen, zu dem der Benutzer Werte für verschiedene Einstellgrößen zur Durchführung einer Datenaufnahme und optional auch zur Verarbeitung erfasster Rohdaten festlegt. Die Verarbeitung der erfassten Rohdaten kann beispielsweise die rechnerische Verarbeitung einer Mehrzahl von Einzelbildern zu einem Satz von Bilddaten umfassen, wie sie bei einer Bildgebung mit strukturierter Beleuchtung oder bei PALM-Verfahren sowie deren Varianten eingesetzt wird.

Die von dem Mikroskopsystem an den Benutzer zur Erläuterung der Wirkung einer Einstellgrö-ße ausgegebenen Informationen beinhalten insbesondere Grafikdaten. Die Grafikdaten können animiert oder in eine Videosequenz eingebunden sein. Die Ausgabe der Grafikdaten kann abhängig davon erfolgen, welche Einstellgröße der Benutzer gerade für eine Veränderung des zugeordneten Werts ausgewählt hat. Die Ausgabe der Grafikdaten kann auch erfolgen, wenn ein Benutzer spezifisch Informationen über eine bestimmte Einstellgröße anfordert, ohne dass es erforderlich ist, dass der Benutzer gerade den Wert dieser Einstellgröße verändert. Es kann eine interaktive Ausgabe derart erfolgen, dass die Grafikdaten abhängig von einer Benutzereingabe verändert werden. Beispielsweise können die Grafikdaten angepasst werden, wenn ein Benutzer den Wert einer Einstellgröße ändert, für die Informationen über die Ausgabeeinrichtung ausgegeben werden. Die ausgegebenen Informationen können zusätzlich auch Audio-Daten beinhalten.

Bei Ausführungsformen sind für wenigstens eine ausgewählte Einstellgröße, für die Grafikdaten zur Erläuterung der Datenaufnahme und optional auch der Datenverarbeitung ausgegeben werden können, die zugeordneten Grafikdaten unabhängig von den erfassten Daten. Dies kann insbesondere für die Bereitstellung von Informationen vor der tatsächlichen Datenerfassung vorteilhaft sein.

Bei Ausführungsformen kann zusätzlich zu den Grafikdaten eine Vorschaudarstellung aus Rohdaten rechnerisch erzeugt und ausgegeben werden, die veranschaulicht, wie sich die aktuellen Werte der Einstellgrößen bei Durchführung der Datenverarbeitung auf die rechnerisch ermittelten Bilddaten auswirken.

Durch die Ausgabe der Grafikdaten können dem Benutzer Informationen geliefert werden, die ihm die Planung der Datenaufnahme und optional auch die Planung der Datenverarbeitung erleichtern. Beispielsweise können für die Planung der Datenaufnahme Grafikdaten ausgegeben werden, die die Auswirkung einer Einstellgröße auf die Geschwindigkeit, Empfindlichkeit und Auflösung des Abbildungsverfahrens illustriert. Es können auch Grafikdaten bereitgestellt werden, die den Verarbeitungsablauf illustrieren. Auf diese Weise kann der Benutzer unterstützt werden bei der Auswahl von Parametern wie Belichtungszeit, Laserleistung, Parameter für eine Bildgebung mit strukturierter Beleuchtung (SIM-Verfahren), Parameter für ein PALM-Verfahren oder ähnliches. Für die Planung der Datenverarbeitung können beispielsweise Grafikdaten ausgegeben werden, die die Wirkungsweise eines Filters repräsentieren, wie er bei der Datenverarbeitung für SIM- oder PALM-Verfahren eingesetzt werden kann, oder die die Wirkungsweise einer Fitmaske illustrieren, wie sie zur Lokalisierung von Molekülen in PALM-Verfahren eingesetzt wird.

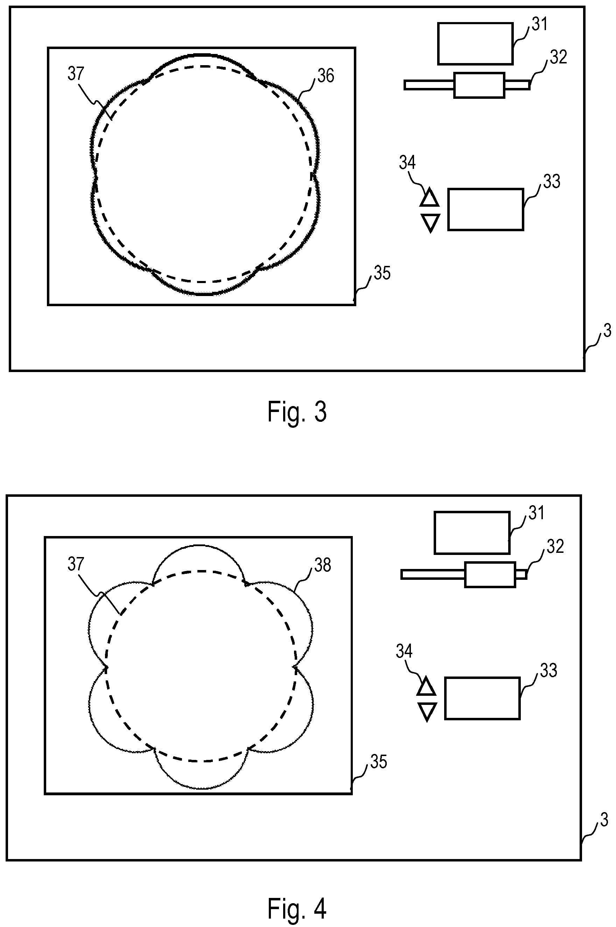

Zur weiteren Veranschaulichung werden unter Bezugnahme auf Fig. 3-9 und Fig. 11-19 Ausführungsbeispiele für grafische Benutzeroberflächen beschrieben. Derartige Benutzeroberflächen können beispielsweise in dem Mikroskopsystem 1 von Fig. 1 oder dem Mikroskopsystem 21 von Fig. 2 eingesetzt werden. Je nachdem, welche Einstellgröße von einem Benutzer ausgewählt ist, kann selektiv eine von mehreren Grafiken zur Erläuterung des zugrundeliegenden Verfahrens ausgegeben werden. So kann ein Mikroskopsystem so ausgestaltet sein, dass ein Benutzer durch sequentielle Auswahl unterschiedlicher Einstellgrößen, für die Informationen auszugeben sind, die sequentielle Anzeige von Grafikdaten veranlasst, wie sie unter Bezugnahme auf Fig. 3-9 und Fig. 11-19 beschrieben werden.

Fig. 3-5 illustrieren schematisch eine grafische Benutzeroberfläche, die über eine optische Ausgabeeinrichtung 3 eines Mikroskopsystems ausgegeben wird. Das Mikroskopsystem kann zur Durchführung eines SIM-Verfahrens ausgestaltet sein. Beispielhaft dargestellt ist die Bereitstellung von Grafikdaten, die ein k-Raum-Volumen bei der Datenaufnahme repräsentieren.

Die grafische Benutzeroberfläche weist ein Anzeigefeld 31 für den Wert einer ersten Einstellgröße und ein Einstellelement 32 zum Verändern des Werts der ersten Einstellgröße auf. Die grafische Benutzeroberfläche weist ein Anzeigefeld 33 für den Wert einer zweiten Einstellgröße und ein Einstellelement 34 zum Verändern des Werts der zweiten Einstellgröße auf. Beispielsweise kann die erste Einstellgröße die Periodizität eines Beleuchtungsmusters angeben, z.B. in Form des Linienabstands. Die zweite Einstellgröße kann die Anzahl unterschiedlicher Orientierungen des Beleuchtungsmusters angeben, für die Rohdaten aufgenommen werden.

Über die grafische Benutzeroberfläche werden Grafikdaten 35 ausgegeben, die den Einfluss der ersten Einstellgröße und der zweiten Einstellgröße auf das zugrundeliegende SIM-Verfahren veranschaulichen. Bei der dargestellten Ausgestaltung stellen die Grafikdaten den Bereich im k-Raum dar, der bei Durchführung des SIM-Verfahrens für die angegebene Periodizität des Beleuchtungsmusters und Anzahl von Orientierungen abgetastet wird. Die Recheneinrichtung des Mikroskopsystems kann die Grenze des Bereichs im k-Raum abhängig von den eingestellten Werten für die Periodizität des Beleuchtungsmusters und die Anzahl von Orientierungen rechnerisch ermitteln und die Ausgabeeinrichtung entsprechend steuern. Zusätzlich kann die Recheneinrichtung des Mikroskopsystems weitere Informationen ausgeben, beispielsweise in Form einer grafischen Darstellung 37, die einer isotropen Auflösung entspricht. Der Benutzer kann so beim Ermitteln von Werten für die erste Einstellgröße und die zweite Einstellgröße unterstützt werden, mit denen eine möglichst isotrope Auflösung erzielt werden kann. Alternativ oder zusätzlich kann eine grafische Darstellung 37 abhängig von einer gewünschten Soll-Auflösung erzeugt werden, die anzeigt, welcher Teil des k-Raums zur Auflösung von Strukturen mit der Soll-Auflösung jedenfalls erforderlich ist.

Die Grafikdaten 35 können abhängig von den jeweils eingestellten Werten für die erste Einstellgröße und die zweite Einstellgröße erzeugt werden. Bei einer Veränderung eines der Werte können die Grafikdaten 35 entsprechend angepasst werden.

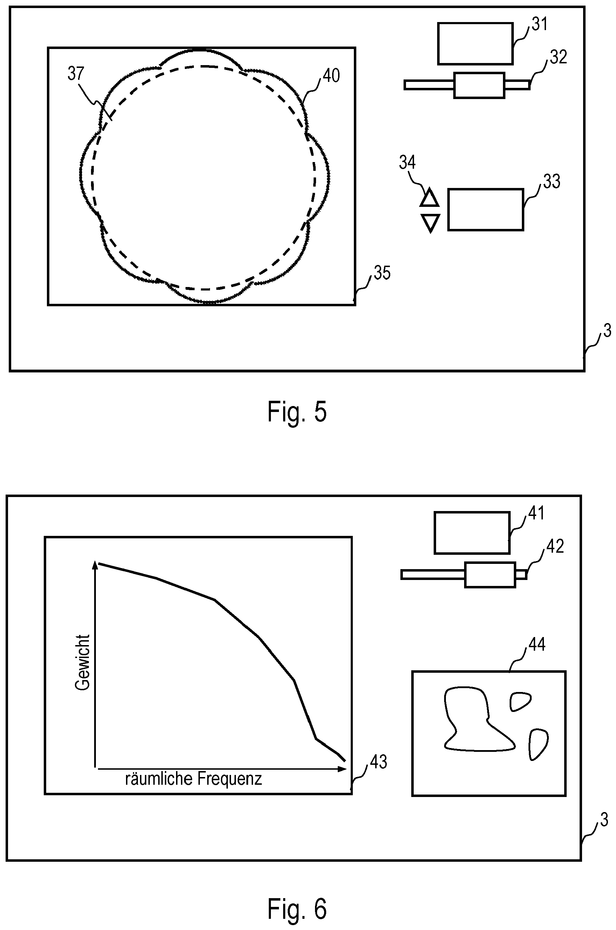

Fig. 4 illustriert beispielhaft die Veränderung der Grafikdaten, die aus einer benutzerdefiniert vorgenommenen Änderung des Werts für die räumliche Periodizität des Beleuchtungsmusters resultiert. Die Grenze des abgedeckten k-Raum-Volumens, die an den Benutzer ausgegeben wird, verschiebt sich zu der Linie 38. Fig. 5 illustriert beispielhaft die Veränderung der Grafikdaten, die aus einer benutzerdefiniert vorgenommenen Änderung des Werts für die Anzahl unterschiedlicher Orientierungen des Beleuchtungsmusters resultiert. Die Grenze des abgedeckten k-Raum-Volumens, die an den Benutzer ausgegeben wird, verschiebt sich zu der Linie 40.

Die Grafikdaten 35 können automatisch ausgegeben werden, wenn ein Benutzer eines der Einstellelemente 32, 34 betätigt oder anderweitig den Wert der ersten Einstellgröße oder der zweiten Einstellgröße anpasst. Die Grafikdaten 35 können selektiv abhängig von einer weiteren Benutzereinstellung ausgegeben werden, die anzeigt, ob der Benutzer die Bereitstellung von Information über das zugrundeliegende Verfahren wünscht.

Fig. 6 illustriert schematisch eine grafische Benutzeroberfläche, die über eine optische Ausgabeeinrichtung 3 eines Mikroskopsystems ausgegeben wird. Beispielhaft dargestellt ist die Bereitstellung von Grafikdaten, die die Wirkungsweise eines Filters bei der Datenverarbeitung illustrieren. Das Mikroskopsystem kann zur Durchführung eines SIM-Verfahrens, eines PALM-Verfahrens oder eines anderen Verfahrens ausgestaltet sein, bei dem erfasste Rohdaten einer Filterung unterzogen werden.

Die grafische Benutzeroberfläche weist ein Anzeigefeld 41 für den Wert einer Einstellgröße und ein Einstellelement 42 zum Verändern des Werts der Einstellgröße auf. Beispielsweise kann die Einstellgröße eine Cut-Off-Frequenz oder Linienbreite eines Filters angeben, der zur Filterung erfasster Rohdaten eingesetzt wird. Eine derartige Filterung von Rohdaten findet bei verschiedenen Mikroskopieverfahren zur Rauschunterdrückung statt. Die Rohdaten können beispielsweise Einzelbilder sein, die bei einem SIM- oder PALM-Verfahren erfasst werden. Durch die Bereitstellung von Informationen über den Filter bzw. die Filtercharakteristik kann der Benutzer bei der Einstellung unterstützt werden, so dass das Risiko einer zu Auflösungsverlust führenden falschen Filtereinstellung verringert werden kann.

Über die grafische Benutzeroberfläche werden Grafikdaten 43 ausgegeben, die den Einfluss der Einstellgröße auf den Filterschritt des Verfahrens veranschaulichen. Beispielsweise kann eine Filtercharakteristik als Funktion der räumlichen Frequenz dargestellt werden. Die Grafikdaten 43 können bei einer Veränderung des Einstellwerts adaptiv an den neuen Wert angepasst werden.

Eine benutzerdefinierte Einstellung der Filtercharakteristik kann auch nach der Datenaufnahme erfolgen. Falls bereits Rohdaten zur Verfügung stehen, kann ein Vorschaubild 44 generiert werden, das aus Durchführung der Datenverarbeitung unter Verwendung des für die Filtercharakteristik eingestellten Werts resultiert. Das Vorschaubild 44 kann gemeinsam mit den Grafikdaten 43 auf der grafischen Benutzeroberfläche dargestellt werden.

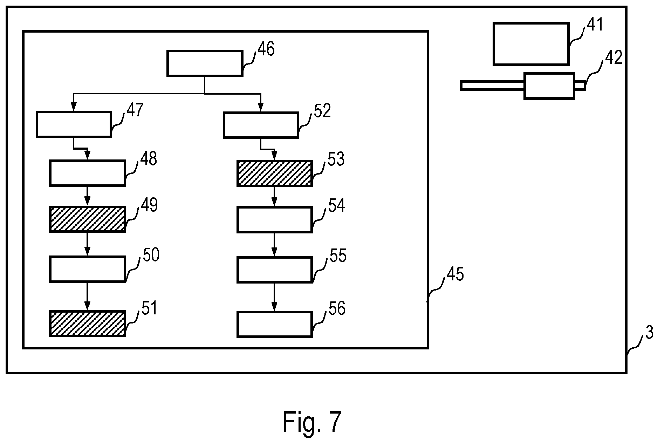

Fig. 7 illustriert schematisch eine grafische Benutzeroberfläche, die über eine optische Ausgabeeinrichtung 3 eines Mikroskopsystems ausgegeben wird. Beispielhaft dargestellt ist die Bereitstellung von Grafikdaten, die den Ablauf der Datenverarbeitung illustrieren. Das Mikroskopsystem kann zur Durchführung eines SIM-Verfahrens, eines PALM-Verfahrens oder eines anderen Verfahrens ausgestaltet sein, bei dem eine komplexe Datenverarbeitung gemäß einer mehrere Schritte umfassenden Prozedur erfolgt. Die grafische Benutzeroberfläche weist ein Anzeigefeld 41 für den Wert einer Einstellgröße und ein Einstellelement 42 zum Verändern des Werts der Einstellgröße auf.

Über die grafische Benutzeroberfläche werden Grafikdaten 45 ausgegeben, die schematisch den Ablauf der Datenverarbeitung darstellen. Die schematische Darstellung des Arbeitsablaufs kann auf verschiedene Weise erfolgen. Beispielsweise kann, wie in Fig. 7 dargestellt, eine Flussdiagrammdarstellung eingesetzt werden. Alternativ oder zusätzlich kann eine schematische Darstellung verwendet werden, die die Bedeutung verschiedener Schritte im Fourierraum oder im Ortsraum veranschaulicht.

Die Grafikdaten 45 können abhängig von einer Einstellgröße dargestellt werden, die der Benutzer ausgewählt hat. Beispielsweise können die Grafikdaten 45 so dargestellt werden, dass aus einer Mehrzahl von Schritten 46-56 der Prozedur diejenigen Schritte 49, 51, 53 hervorgehoben dargestellt sind, deren Durchführung durch die ausgewählte Einstellgröße unmittelbar beeinflusst werden. Zur besseren Erläuterung können Textinformationen in die Grafikdaten 45 eingebaut sein. Beispielsweise kann der Block 46 als SIM-Verarbeitung bezeichnet sein. Die Blöcke 47-51 können Textelemente aufweisen, die erläutern, dass es sich um eine Vorverarbeitung (Block 47), Subtraktion des Hintergrundsignals (Block 48), Skalierung (Block 49), Trennung verschiedener Abbildungsordnungen (Block 50) und Speicherung der Zwischenergebnisse (Block 51) handelt. Die Blöcke 51-56 können Textelemente aufweisen, die erläutern, dass es sich um eine Hauptverarbeitung (Block 52) mit Verschieben der unterschiedlichen Ordnungen (Block 53), Ermitteln von Mischinformation gemäß dem Signal-Rausch-Verhältnis (Block 54), Filterung (Block 55) und Rücktransformation (Block 56) handelt. Ähnlich können Blöcke für eine Nachverarbeitung, z.B. mit den Schritten Clipping, Isotrope Auflösung und Ausrichten von Farbkanälen vorgesehen sein.

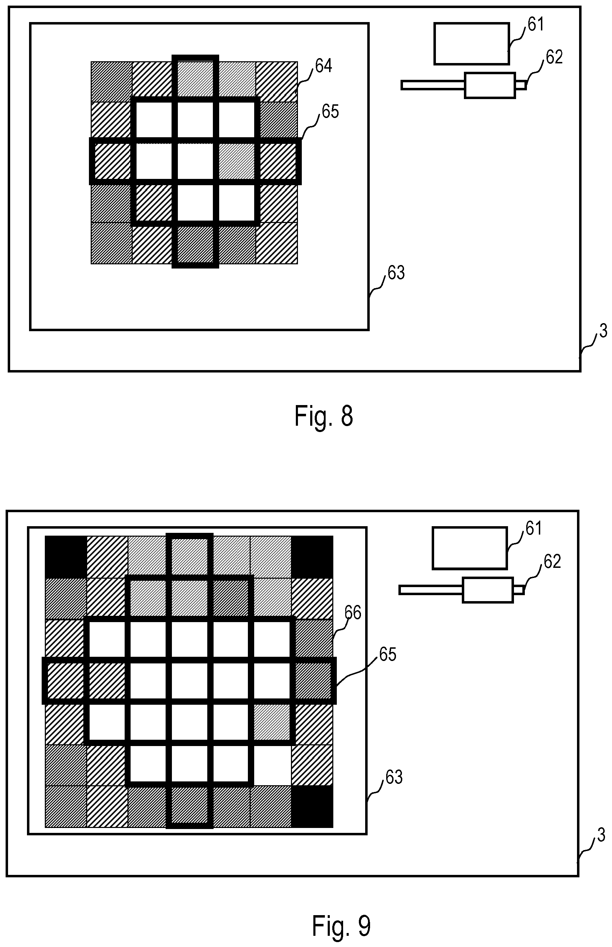

Fig. 8 und 9 illustrieren schematisch eine grafische Benutzeroberfläche, die über eine optische Ausgabeeinrichtung 3 eines Mikroskopsystems ausgegeben wird. Beispielhaft dargestellt ist die Ausgabe von Grafikdaten zur Erläuterung des Einflusses einer Fitmaske bei der Lokalisierung von Molekülen. Das Mikroskopsystem kann zur Durchführung eines PALM-Verfahrens oder eines anderen Verfahrens ausgestaltet sein, bei dem eine Fitmaske an erfasste Rohdaten angepasst wird. Beispiele für derartige Verfahren beinhalten Lumineszenzmikroskopieverfahren, bei denen zur Lokalisierung von Molekülen eine Fitmaske über die Rohdaten gelegt wird.

Die grafische Benutzeroberfläche weist ein Anzeigefeld 61 für den Wert einer Einstellgröße und ein Einstellelement 62 zum Verändern des Werts der Einstellgröße auf. Beispielsweise kann die Einstellgröße eine Größe einer Gauß-Fitmaske sein. Eine derartige Fitmaske kommt beispielsweise bei der Datenverarbeitung in PALM-Verfahren oder verwandten Verfahren Einsatz. Durch die Bereitstellung von Informationen über die Fitmaske kann der Benutzer bei der Wahl einer geeigneten Fitmaske unterstützt werden.

Über die grafische Benutzeroberfläche werden Grafikdaten 63 ausgegeben, die den Einfluss der Fitmaskengröße, die bei dem Lokalisierungsschritt eingesetzt wird, grafisch darstellen. Die Grafikdaten 63 können bei einer Veränderung des Einstellwerts adaptiv so angepasst werden, dass sie dem neuen Wert für die Größe der Fitmaske entsprechen, den der Benutzer festlegt.

Die Fitmaske kann einem Kamerasignal bzw. einem Ausschnitt eines Kamerasignals überlagert dargestellt werden, um so die Auswahl der richtigen Fitmaskengröße zu erleichtern.

Die Grafikdaten 63 beinhalten das Kamerasignal 64 bzw. 66 eines einzelnen Moleküls. Dabei kann es sich um tatsächlich erfasste Daten handeln, falls bereits eine Datenaufnahme erfolgt ist. Alternativ kann die Recheneinrichtung eine Bibliothek von Beispieldaten aufweisen, die mit in die Grafikdaten eingebunden werden können. Die Beispieldaten können charakteristische Molekülbilder als Funktion der Werte verschiedener Einstellgrößen für die Datenaufnahme beinhalten. Alternativ kann die Recheneinrichtung eingerichtet sein, um die Beispieldaten anhand einer Simulation rechnerisch zu generieren. In Fig. 8 und 9 repräsentieren unterschiedliche Schraffuren schematisch unterschiedliche Helligkeitswerte.

Die Grafikdaten 63 beinhalten weiterhin eine Darstellung 65 der Fitmaske. Diese kann dem Kamerasignal überlagert dargestellt werden. Bei einer Veränderung der Einstellgröße über das Einstellelement 62 kann die Darstellung 65 der Fitmaske entsprechend angepasst werden.

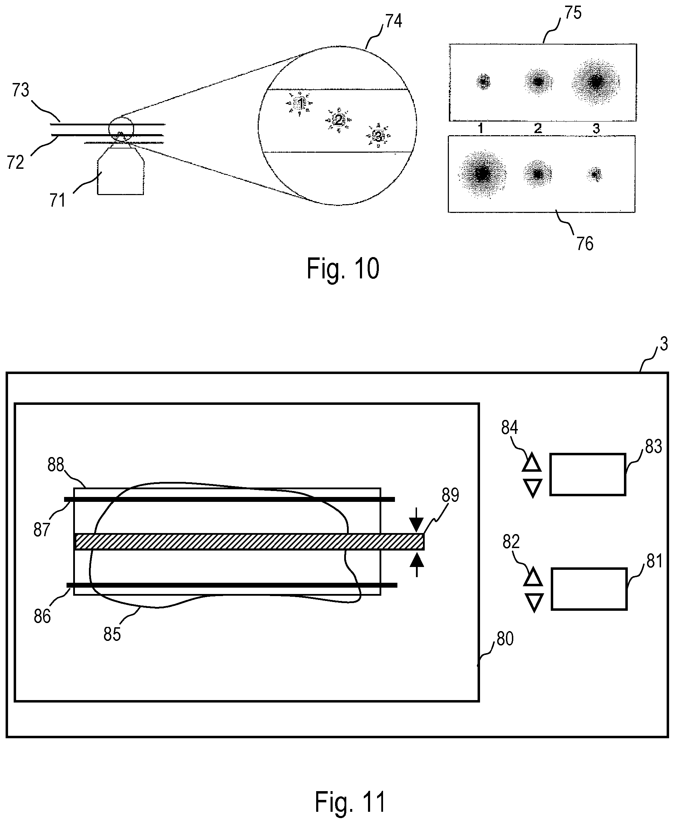

Unter Bezugnahme auf Fig. 10 und 11 wird die Bereitstellung von Grafikdaten für ein Lumineszenzmikroskopieverfahren beschrieben, mit dem eine dreidimensionale Abbildung erzeugbar ist. Beispiele für derartige Verfahren und korrespondierende Mikroskopsysteme beinhalten eine dreidimensionale PALM-Abbildung. Dazu kann ein Mikroskopsystem eine geeignete Einrichtung zur Tiefenselektion aufweisen.

Fig. 10 illustriert ein derartiges Verfahren und Mikroskop. Über ein Objektiv 71 des Mikroskops kann eine Mehr-Photonen-Anregung erfolgen. Eine Einrichtung zur räumlich-zeitlichen Pulsformung kann eine Tiefenselektion erlauben. So kann für mehrere Objektebenen 72, 73 jeweils ein 2D-Bild erfasst werden. Die Einzelheit 74 in Fig. 10 zeigt schematisch eine Situation mit drei fluoreszierenden Molekülen. Das erfasste 2D-Bild 75 für die Objektebene 72 weist Molekülbilder unterschiedlicher Größe und Intensität auf, wobei die Abweichungen in Größe und Intensität durch die unterschiedlichen Lagen der Moleküle in Axialrichtung des Mikroskops verursacht werden. Das erfasste 2D-Bild 76 für die Objektebene 73 weist Molekülbilder unterschiedlicher Größe und Intensität auf, wobei die Abweichungen in Größe und Intensität durch die unterschiedlichen Lagen der Moleküle in Axialrichtung des Mikroskops verursacht werden. Aus dieser Information kann nicht nur die laterale, sondern auch die axiale Lage der Moleküle bestimmt werden. Dabei besteht eine Wechselbeziehung zwischen erreichbarer axialer Auflösung und messbarem Bereich in Axialrichtung.

Fig. 11 zeigt schematisch eine grafische Benutzeroberfläche, die über eine optische Ausgabeeinrichtung 3 eines Mikroskopsystems ausgegeben wird. Beispielhaft dargestellt ist die Bereitstellung von Grafikdaten, die den Einfluss der Lage der Objektebenen veranschaulichen. Das Mikroskopsystem kann zur Durchführung eines PALM-Verfahrens zur dreidimensionalen Bildgebung ausgestaltet sein.

Die grafische Benutzeroberfläche weist ein Anzeigefeld 81 für den Wert einer ersten Einstellgröße und ein Einstellelement 82 zum Verändern des Werts der ersten Einstellgröße auf. Die grafische Benutzeroberfläche weist ein Anzeigefeld 83 für den Wert einer zweiten Einstellgröße und ein Einstellelement 84 zum Verändern des Werts der zweiten Einstellgröße auf. Beispielsweise kann die erste Einstellgröße die Lage einer ersten Objektebene in Axialrichtung des Mikroskops und die zweite Einstellgröße die Lage einer zweiten Objektebene in Axialrichtung des Mikroskops angeben.

Über die grafische Benutzeroberfläche werden Grafikdaten 80 ausgegeben, die den Einfluss der ersten Einstellgröße und der zweiten Einstellgröße auf das zugrundeliegende dreidimensionale PALM-Verfahren veranschaulichen. Bei der dargestellten Ausgestaltung stellen die Grafikdaten 80 die Lage der Objektebenen 86 und 87 sowie den messbaren Bereich 88 und die erzielbare axiale Auflösung 89 dar. Diese Informationen können einem Übersichtsbild 85 des Objekts überlagert sein. Die Recheneinrichtung des Mikroskopsystems kann den messbaren Bereich 88 und die erreichbare Auflösung 89 abhängig von den eingestellten Werten für die Lage der ersten und zweiten Objektebenen rechnerisch ermitteln. Zusätzlich kann die Recheneinrichtung des Mikroskopsystems diese Größen abhängig von weiteren Informationen ermitteln, die benutzerdefiniert eingegeben werden können, beispielsweise abhängig von einer Dichte der fluoreszierenden Moleküle in der Probe.

Die Grafikdaten 80 können abhängig von den jeweils eingestellten Werten für die erste Einstellgröße und die zweite Einstellgröße erzeugt werden. Bei einer Veränderung eines der Werte, d.h. bei einer Verschiebung der Lage einer Objektebene, können die Grafikdaten 80 entsprechend angepasst werden.

Während unter Bezugnahme auf Fig. 8-11 die Ausgabe von Grafikdaten zur Erläuterung der Datenaufnahme oder -verarbeitung für PALM-Verfahren anhand einiger Beispiele beschrieben wurde, können für weitere Einstellgrößen weitere Grafikdaten ausgegeben werden. Beispielsweise können abhängig von einer Einstellgröße, die angibt, ob Molekülbilder aus verschiedenen Objektebenen vor oder nach der Lokalisierung der einzelnen Moleküle gruppiert werden sollen, Grafikdaten ausgegeben werden, die die Unterschiede in der Datenverarbeitung für die beiden Varianten veranschaulichen. Zusätzlich kann eine Vorschaudarstellung der Daten, die für die jeweilige Einstellung, ob Molekülbilder aus verschiedenen Objektebenen vor oder nach der Lokalisierung der einzelnen Moleküle gruppiert werden sollen, erhalten werden, generiert und ausgegeben werden.

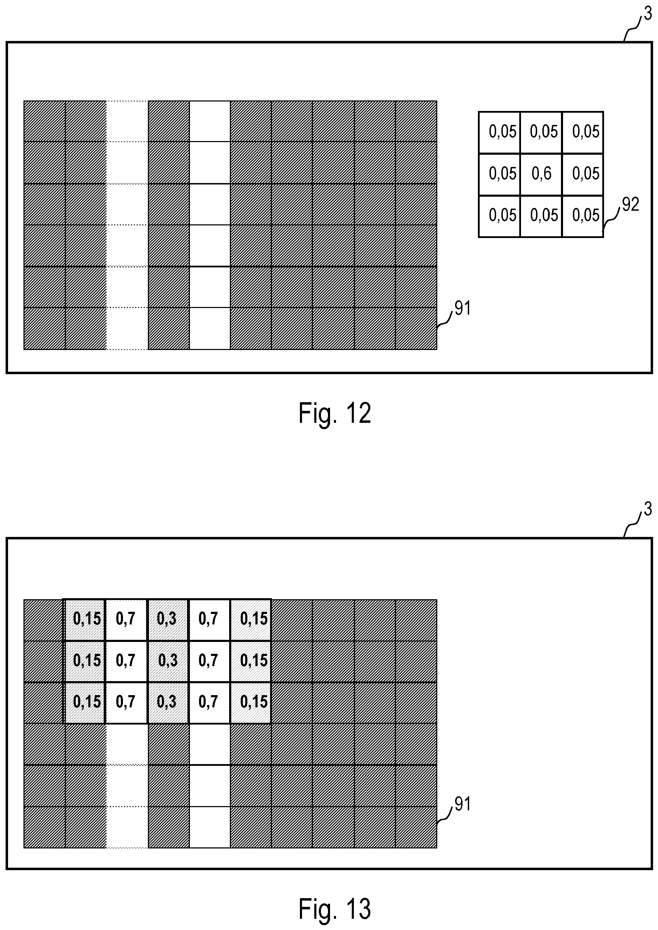

Fig. 12 und 13 illustrieren schematisch eine grafische Benutzeroberfläche, die über eine optische Ausgabeeinrichtung 3 eines Mikroskopsystems ausgegeben wird. Beispielhaft dargestellt ist die Ausgabe von Grafikdaten, die eine Filterung illustrieren. Das Mikroskopsystem kann zur Durchführung eines SIM-Verfahrens, eines PALM-Verfahrens oder eines anderen Verfahrens ausgestaltet sein, bei dem erfasste Rohdaten einer Filterung unterzogen werden. Eine Darstellung, wie sie schematisch in Fig. 12 und 13 dargestellt ist, kann ausgegeben werden, sobald ein Benutzer Informationen über die Funktionsweise oder Ausgestaltung eines Filters anfordert.

Auf der grafischen Benutzeroberfläche ist ein Datenfeld 91 dargestellt. Die Pixelwerte sind durch verschiedene Helligkeitsstufen und/oder numerische Werte in den einzelnen Feldern dargestellt. Ein Filterkern 92 mit beispielhaften Filterkoeffizienten wird ebenfalls auf der grafischen Benutzeroberfläche dargestellt. Die Filterkoeffizienten können abhängig von aktuell gesetzten Werten für ein Filter ermittelt werden.

Der Benutzer kann den Filterkern 92 an verschiedene Positionen des Datenfelds 91 verschieben, wie schematisch in Fig. 13 dargestellt ist. Dabei wird die Wirkung des Filterkerns an den einzelnen Positionen des Datenfelds veranschaulicht. Wie schematisch in Fig. 13 dargestellt ist, können beispielsweise numerische Werte angezeigt werden, die durch Filterung des Datenfelds 91 mit dem an der entsprechenden Position positionierten Filterkern 92 resultieren würden. Geeignete alternative oder zusätzliche Kodierungen können vorgenommen werden, beispielsweise unter Verwendung verschiedener Grau- oder Farbtöne, um die Wirkung des Filters zu illustrieren.

Das Datenfeld 91 kann ein Feld von Beispieldaten sein. Falls bereits Rohdaten erfasst wurden, kann das Datenfeld 91 aber auch einem Ausschnitt eines tatsächlich aufgenommenen Rohbildes entsprechen. Der Benutzer kann dann einen Filterkern selektiv über einen interessierenden Abschnitt des Rohbildes positionieren, um die Wirkung der Filterung zu beobachten. Verschiedene Filtercharakteristiken können so ausgetestet werden. Anschließend kann eine Datenverarbeitung abhängig von dem benutzerdefiniert eingestellten Filterkern vorgenommen werden.

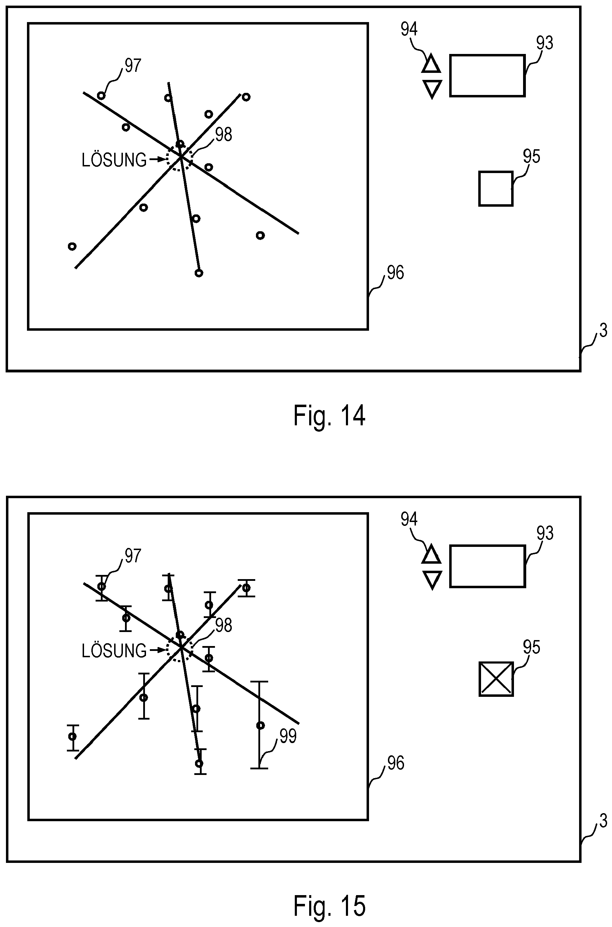

Fig. 14 und 15 illustrieren schematisch eine grafische Benutzeroberfläche, die über eine optische Ausgabeeinrichtung 3 eines Mikroskopsystems ausgegeben wird. Beispielhaft dargestellt ist die Ausgabe von Grafikdaten zur Veranschaulichung eines Entmischens von Mehrkanalbildern. Das Mikroskopsystem kann zur Durchführung eines Verfahrens ausgestaltet sein, bei dem zur Datenverarbeitung Mehrkanalbilder entmischt werden. Eine Darstellung, wie sie schematisch in Fig. 14 und 15 dargestellt ist, kann ausgegeben werden, sobald ein Benutzer Informationen darüber anfordert, welche Wirkung eine Veränderung der Anzahl von Kanälen auf das zugrundeliegende Verfahren hat oder welche Wirkung die Option einer Gewichtung mit Datenunsicherheiten hat.

Die grafische Benutzeroberfläche weist ein Anzeigefeld 93 für den Wert einer Einstellgröße und ein Einstellelement 94 zum Verändern des Werts der Einstellgröße auf. Beispielsweise kann die Einstellgröße eine Anzahl von Kanälen sein. Die grafische Benutzeroberfläche weist weiterhin ein Einstellelement 95 zum Selektieren einer Gewichtungsoption auf.

Über die grafische Benutzeroberfläche werden Grafikdaten 96 ausgegeben, die den Einfluss der Anzahl von Kanälen und der Gewichtungsoption visualisieren. Die Grafikdaten 96 können bei einer Veränderung der Anzahl von Kanälen oder der Einstellung für die Gewichtungsoption adaptiv an den neu gesetzten Wert angepasst werden.

Das Entmischen von Mehrkanalbildern entspricht in technischer Hinsicht der Lösung eines überbestimmten Gleichungssystems, beispielsweise unter Verwendung der Methode der kleinsten Quadrate. Zur Visualisierung können Grafikdaten ausgegeben werden, die die Lösung des Gleichungssystems mit dem Legen von Ausgleichsgeraden durch Messpunkte vergleichen, die sich in der Lösung schneiden. Fig. 14 zeigt schematisch derartige Grafikdaten 96 mit einer Mehrzahl von Messdaten 97 und zugeordneten Ausgleichsgeraden. Die Unsicherheit der Lösung kann schematisch als Kreis 98 um den Schnittpunkt der Ausgleichsgeraden veranschaulicht werden. Das Entmischen der Mehrkanalbilder als Lösung eines überbestimmten Gleichungssystems ist hier dargestellt als Schnitt von Geraden in zwei Dimensionen, um die Wirkung des Lösungsalgorithmus auf dem tatsächlichen n-dimensionalen Datenraum zu veranschaulichen.

Fig. 15 illustriert, wie bei Auswählen der Gewichtungsoption zusätzlich Fehlerbalken 99 eingeblendet werden, um die Gewichtungsoption zu visualisieren.

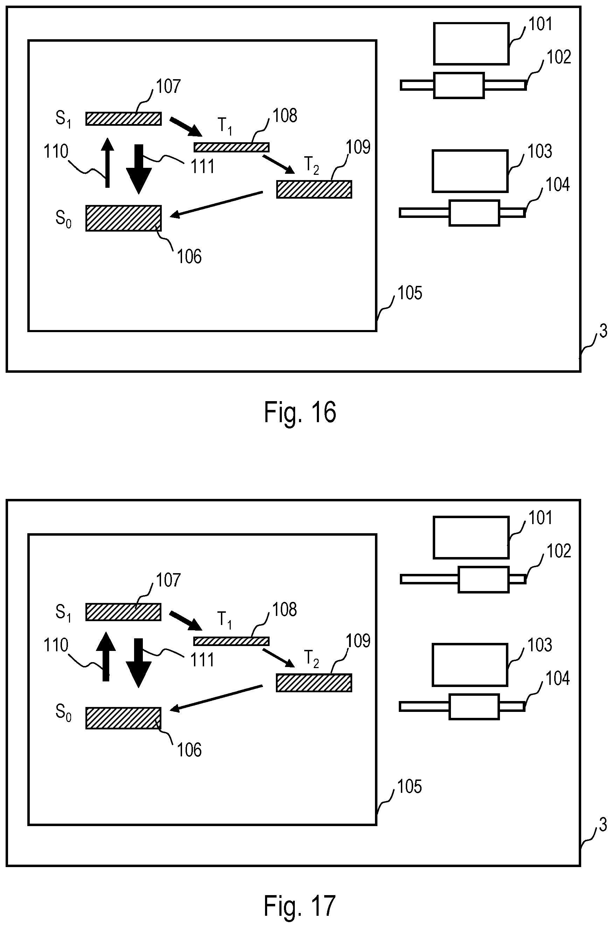

Bei Ausführungsbeispielen können über die optische Ausgabeeinrichtung Grafikdaten ausgegeben werden, die dem Benutzer optische Übergänge in Molekülen veranschaulichen, die bei einer nachfolgenden Datenaufnahme angeregt werden können. Anwendungsfälle für derartige Ausgestaltungen beinhalten Mikroskopsysteme zur Lumineszenzmikroskopie, beispielsweise zur Durchführung eines PALM-Verfahrens. Die Recheneinrichtung des Mikroskopsystems kann dabei abhängig von benutzerdefiniert gesetzten Parametergröße Besetzungswahrscheinlichkeiten für Molekülzustände und/oder Übergangsraten optisch aktivierbarer oder optisch schaltbarer Moleküle, beispielsweise von Farbstoffmolekülen, automatisch berechnen und über die optische Ausgabeeinrichtung als Grafikdaten ausgeben. Die Ausgabe kann beispielsweise die Darstellung eines Jablonski-Diagramms oder eines Markov-Diagramms beinhalten. Die Darstellung des Diagramms kann angepasst werden, wenn benutzerdefiniert ein Wert für eine Leistungsdichte oder Wellenlänge eines Umschaltsignals oder für eine Leistungsdichte oder Wellenlänge eines Anregungssignals verändert wird. Unter Bezugnahme auf Fig. 16-19 wird dies anhand eines Ausführungsbeispiels ausführlicher beschrieben.

Fig. 16 und 17 illustrieren schematisch eine grafische Benutzeroberfläche, die über eine optische Ausgabeeinrichtung 3 eines Mikroskopsystems ausgegeben wird. Beispielhaft dargestellt ist die Ausgabe von Grafikdaten zur Veranschaulichung des Einflusses von Einstellgrößen auf die Besetzung von Molekülzuständen und/oder Übergangsraten zwischen Molekülzuständen. Das Mikroskopsystem kann zur Durchführung eines Lumineszenzmikroskopieverfahrens ausgestaltet sein, bei dem zur Erfassung von Rohdaten Moleküle optisch geschaltet oder optisch aktiviert werden. Eine Darstellung, wie sie schematisch in Fig. 16 und 17 dargestellt ist, kann beispielsweise ausgegeben werden, sobald ein Benutzer Informationen darüber anfordert, welche Wirkung eine Veränderung einer Laserleistungsdichte oder eines Laserspektrums auf die Detektion von Lumineszenzsignalen hat.

Die grafische Benutzeroberfläche weist ein Anzeigefeld 101 für den Wert einer ersten Einstellgröße und ein Einstellelement 102 zum Verändern des Werts der ersten Einstellgröße auf. Die grafische Benutzeroberfläche weist ein Anzeigefeld 103 für den Wert einer zweiten Einstellgrö-ße und ein Einstellelement 104 zum Verändern des Werts der zweiten Einstellgröße auf. Beispielsweise kann die erste Einstellgröße eine Leistungsdichte eines Lasers und die zweite Einstellgröße ein Spektrum bzw. das Maximum des Laserspektrums sein, wobei der Laser zum Umschalten und/oder Aktivieren der Moleküle verwendet wird.

Über die grafische Benutzeroberfläche werden Grafikdaten 105 ausgegeben, die den Einfluss der Laserleistung und/oder des Spektrums auf die molekularen Prozesse repräsentieren, die bei Durchführung einer Datenaufnahme hervorgerufen werden. Bei der dargestellten Ausgestaltung stellen die Grafikdaten 105 schematisch unterschiedliche Molekülzustände dar. Beispielhaft dargestellt sind zwei Singulett- und zwei Triplett-Zustände sowie Pfeile, die die Übergänge zwischen den Zuständen repräsentieren.

Die Recheneinrichtung des Mikroskopsystems ist eingerichtet, um abhängig von den gesetzten Werten für die erste und zweite Einstellgröße die Besetzungswahrscheinlichkeiten der relevanten Molekülzustände und/oder Übergangsraten zwischen diesen Molekülzuständen zu ermitteln. Die Ermittlung dieser Größen erfolgt abhängig von dem jeweils verwendeten optisch aktiven Molekül, beispielsweise einem bestimmten Farbstoff. Bei einer Ausgestaltung kann der Benutzer Information über das optisch aktive Molekül bzw. den Farbstoff über eine Benutzerschnittstelle eingeben. Bei einer weiteren Ausgestaltung kann die Recheneinrichtung so eingerichtet sein, dass sie das Mikroskopsystem steuert, um eine erste Datenaufnahme, beispielsweise einen groben spektralen Scan durchzuführen. Die Recheneinrichtung kann durch einen Datenbankabgleich des so ermittelten Spektrums automatisch den Farbstoff identifizieren.

Die Ermittlung der Übergangsraten erfolgt bei einer Ausgestaltung durch Abfrage einer Datenbank, in der Übergangsraten für bestimmte diskrete Werte der ersten und zweiten Einstellgröße, d.h. der Laserleistung und des Laserspektrums, hinterlegt sind. Die Recheneinrichtung kann eine Interpolation oder Extrapolation der hinterlegten Übergangsraten abhängig von den benutzerdefiniert gesetzten Werten für die Leistung und Wellenlänge des Umschalt- oder Anregungssignals vornehmen. Die Besetzungswahrscheinlichkeiten können dann auf an sich bekannte Weise basierend auf den Übergangsraten berechnet werden, beispielsweise unter Verwendung von für Markov-Prozesse entwickelten Methoden.

Alternativ können die Besetzungswahrscheinlichkeiten und/oder Übergangsraten rechnerisch anhand eines Modells ermittelt werden. Zur rechnerischen Ermittlung der Besetzungswahrscheinlichkeiten und/oder Übergangsraten kann die Recheneinrichtung aus einer Datenbank die relevanten molekularen Größen, beispielsweise Matrixelemente für optische Übergänge, Relaxationsraten für die spontane Relaxation oder andere Übergangswahrscheinlichkeiten auslesen. Die Übergangsraten werden als Funktion der benutzerdefiniert eingestellten Werte für die Einstellgrößen rechnerisch ermittelt. Das Modell, nach dem die Übergangsraten ermittelt werden, kann von weiteren Parametern, beispielsweise von der Temperatur abhängen. Die Recheneinrichtung kann mit Sensoren des Mikroskops gekoppelt sein, um automatisch Informationen über Ist-Werte von Größen wie der Temperatur oder dem pH-Wert der Probe auszulesen und zur Ermittlung der Besetzungswahrscheinlichkeiten und/oder Übergangsraten heranzuziehen. Alternativ oder zusätzlich können diese Werte auch von einem Benutzer eingegeben werden, um dem Benutzer Informationen über den Einfluss von Temperatur oder pH-Wert auf die optischen Prozesse zu liefern. Die Berechnung der Besetzungswahrscheinlichkeiten kann auf an sich bekannte Weise basierend auf den Übergangsraten erfolgen, beispielsweise unter Verwendung von für Markov-Prozesse entwickelten Methoden.

Bei der in Fig. 16 und 17 dargestellten Ausgestaltung steuert die Recheneinrichtung die optische Ausgabeeinrichtung so, dass die von der Recheneinrichtung ermittelten Besetzungswahrscheinlichkeiten grafisch aufbereitet ausgegeben werden. Dazu kann die Recheneinrichtung die Grafikdaten 105 so erzeugen, dass die Höhe oder eine farbliche Codierung von Balken-Symbolen 106-109, die den relevanten Zuständen des optisch aktivierbaren oder optisch schaltbaren Moleküls zugeordnet sind, proportional zu Besetzungswahrscheinlichkeiten sind.

Zusätzlich oder alternativ können Informationen über Übergangsraten ausgegeben werden. Dazu kann die Recheneinrichtung die Grafikdaten 105 so erzeugen, dass die Dicke von Überganspfeilen 110, 111 proportional zur Übergangsrate ist. Alternativ oder zusätzlich können Besetzungswahrscheinlichkeiten und/oder Übergangsraten auch mit alphanumerischen Symbolen in den Grafikdaten 105 angezeigt werden.

Wie in Fig. 17 dargestellt ist, kann die Recheneinrichtung die Grafikdaten 105 abhängig von den benutzerdefiniert gesetzten Werten der Einstellgrößen anpassen. Falls beispielsweise der Wert der Laserleistung von einem Benutzer erhöht wird, können die Grafikdaten 105 so angepasst werden, dass sie die neuen Besetzungswahrscheinlichkeiten und/oder Übergangsraten darstellen.

Grafikdaten, die Besetzungswahrscheinlichkeiten repräsentieren, können auch zeitlich veränderlich angepasst werden, um die Dynamik der Bevölkerung oder Entvölkerung einzelner Zustände zu veranschaulichen, nachdem ein Umschalt- oder Aktivierungssignal eingestrahlt wird. Auf diese Weise können dem Benutzer besonders anschaulich Informationen über die Prozesse vermittelt werden, auf denen das Abbildungsverfahren beruht.

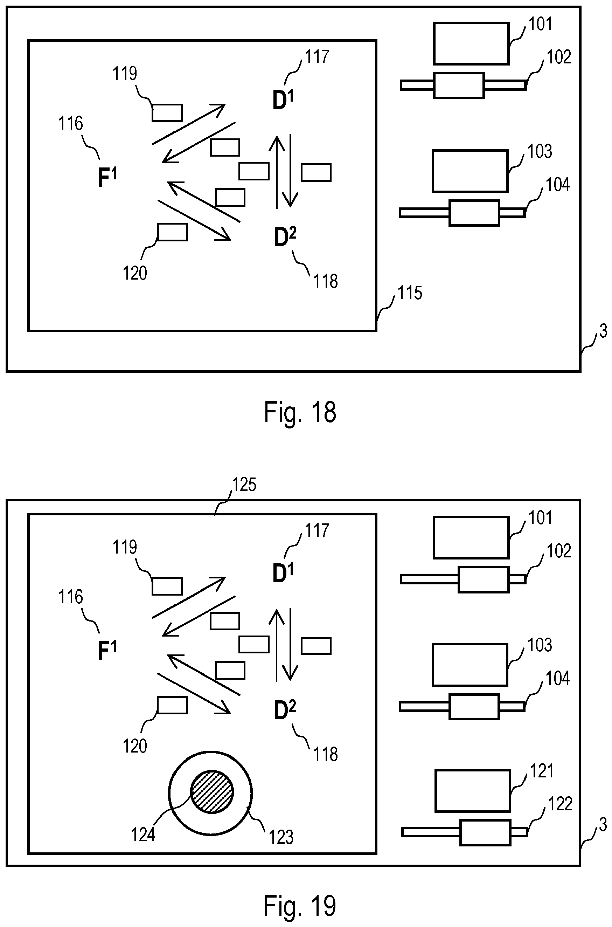

Informationen über Besetzungswahrscheinlichkeiten und/oder Übergangsraten können nicht nur als Jablonski-Diagramm, sondern auch als Markov-Diagramm grafisch ausgegeben werden, wie unter Bezugnahme auf Fig. 18 und 19 beschrieben werden wird.

Fig. 18 illustriert Grafikdaten 115, die von der Recheneinrichtung eines Mikroskopsystems über eine optische Ausgabeeinrichtung ausgegeben werden können. Dabei ist ein Markov-Diagramm dargestellt, bei dem unterschiedliche relevante Zustände des Farbstoffmoleküls mit alphanumerischen Zeichen 116-118 repräsentiert sind. Die relevanten Zustände des Farbstoffmoleküls können von der Recheneinrichtung automatisch ermittelt werden, wie unter Bezugnahme auf Fig. 16 und 17 beschrieben. Abhängig von den benutzerdefiniert festgesetzten Werten für die Leistungsdichte oder das Spektrum eines Anregungs- oder Umschaltsignals können sich die relevanten Molekülzustände auch ändern. Die von der Recheneinrichtung ermittelten Übergangsraten können als numerische Werte, die nur schematisch durch leere Boxen 119, 120 dargestellt sind, in das Markov-Diagramm integriert werden. Die Ermittlung der Übergangsraten kann wie unter Bezugnahme auf Fig. 16 und 17 beschrieben erfolgen.

Zusätzliche Informationen können ausgegeben werden, um dem Benutzer Informationen über das Verfahren zu vermitteln, das der Datenaufnahme zugrunde liegt. Beispielsweise kann die Recheneinrichtung eingerichtet sein, um eine durchschnittliche Verweildauer eines Farbstoffmoleküls in einem fluoreszierenden Zustand zu ermitteln. Diese hängt von einer Leistungsdichte eines Anregungssignals ab. Eine Ausgestaltung wird unter Bezugnahme auf Fig. 19 näher beschrieben.

Fig. 19 zeigt schematisch eine grafische Benutzeroberfläche, die über eine optische Ausgabeeinrichtung 3 eines Mikroskopsystems ausgegeben wird. Das Mikroskopsystem kann zur Durchführung eines Lumineszenzmikroskopieverfahrens ausgestaltet sein, bei dem zur Erfassung von Rohdaten Moleküle optisch geschaltet oder optisch aktiviert werden.

Auf der grafischen Benutzeroberfläche werden Grafikdaten 125 ausgegeben. Die Grafikdaten beinhalten ein Jablonski- oder Markov-Diagramm, wie unter Bezugnahme auf Fig. 16-18 beschrieben. Zusätzlich beinhalten die Grafikdaten Daten 124, die die durchschnittliche Verweildauer des Farbstoffmoleküls im fluoreszierenden Zustand repräsentieren. Die durchschnittliche Verweildauer wird von der Recheneinrichtung des Mikroskopsystems automatisch ermittelt. Beispielsweise kann die Verweildauer im fluoreszierenden Zustand abhängig von den rechnerisch ermittelten Übergangsraten des Moleküls bestimmt werden. Die Verweildauer kann beispielsweise durch eine Größe oder Helligkeit eines ausgegebenen Symbols, beispielsweise eines Kreises oder Balkens, symbolisiert werden. Durch die grafische Ausgabe der durchschnittlichen Verweildauer kann dem Benutzer Information zur Verfügung gestellt werden, die für die Einstellung einer Belichtungszeit für eine nachfolgende Datenaufnahme relevant ist.

Die grafische Benutzeroberfläche kann ein Feld 121 zur Anzeige eines gesetzten Werts der Belichtungszeit und ein Einstellelement 122 zum Einstellen der Belichtungszeit aufweisen. Die Recheneinrichtung kann die Grafikdaten 125 so erzeugen, dass sie auch eine grafische Darstellung 123 der gesetzten Belichtungszeit aufweisen. Wie in Fig. 19 skizziert, können die grafische Darstellung 124 der rechnerisch ermittelten Verweildauer und die grafische Darstellung 123 der eingestellten Belichtungszeit so erzeugt werden, dass dem Benutzer ein Abgleich erleichtert wird.

Wie unter Bezugnahme auf Fig. 3-19 beschrieben wurde, können nach Ausführungsformen der Erfindung dem Benutzer Informationen über die Bedeutung verschiedener Einstellgrößen über eine grafische Benutzeroberfläche zur Verfügung gestellt werden. Der Benutzer kann so dabei unterstützt werden, geeignete Parameterwerte für eine Datenaufnahme und optional auch für eine Datenverarbeitung festzulegen. Sobald der Benutzer die eingestellten Werte für die verschiedenen Einstellgrößen bestätigt, kann die Datenaufnahme und optional auch Datenverarbeitung abhängig von den benutzerdefiniert festgelegten Werten durchgeführt werden.

Abwandlungen und Weiterbildungen der unter Bezugnahme auf die Figuren beschriebenen Ausführungsbeispiele können bei weiteren Ausführungsbeispielen verwirklicht werden. Beispielsweise können bei weiteren Ausführungsbeispielen zusätzlich zu den in Ansprüchen 1 und 9 definierten Einstellgrößen noch andere als die unter Bezugnahme auf Fig. 3-19 beschriebenen Grafikdaten ausgegeben werden.

So können bei Ausführungsbeispielen Verarbeitungsabläufe basierend auf speziellen Modellen schematisch dargestellt werden. Beispielsweise kann eine Flussdiagrammdarstellung angezeigt werden. Die Flussdiagrammdarstellung kann abhängig davon generiert oder angepasst werden, welche Einstellgröße der Benutzer zur Bearbeitung selektiert hat.

Bei weiteren Ausführungsbeispielen können die einzelnen Schritte der Datenaufnahme oder Datenverarbeitung visualisiert werden. Dazu können Animationen eingesetzt werden.

Bei weiteren Ausführungsbeispielen können die Grafikdaten visuelle Hervorhebungen in Formeln aufweisen, um die Bedeutung einer Einstellgröße auf verschiedene Terme einer Formel zu erläutern.

Bei weiteren Ausführungsbeispielen können Ergebnisse einer Simulation ausgegeben werden.

Beispielsweise kann die Wirkungsweise eines 2-Kanten-Filters durch Ausgabe entsprechender Simulationsdaten visualisiert werden.

Bei weiteren Ausführungsbeispielen können Farbstoffeigenschaften visualisiert werden. Dazu können durch eine Benutzereingabe Daten über einen in der Probe eingesetzten Farbstoff eingegeben werden. Das Mikroskopsystem kann auch eingerichtet sein, um den eingesetzten Farbstoff automatisch zu ermitteln. Das Spektrum von Umschalt- und Anregungssignalen kann grafisch dargestellt werden, um dem Benutzer die Einstellung einer geeigneten Wellenlänge abhängig von den Eigenschaften des Farbstoffs zu erleichtern. Alternativ können an den Benutzer abhängig von einer gewählten Wellenlänge Informationen über einen geeigneten Farbstoff ausgegeben werden.

Wie unter Bezugnahme auf Fig. 16-19 beschrieben, können Informationen über die Wirkung von bestimmten Umschalt- oder Anregungswellenlängen eines PALM-Verfahrens und über die Wirkung der Leistung der entsprechenden Signale für einen verwendeten Farbstoff ausgegeben werden. Dazu kann die Recheneinrichtung des Mikroskopsystems beispielsweise Übergangswahrscheinlichkeiten berechnen und in Form eines Jablonski-Diagramms, eines Markov-Diagramms oder einer anderen Darstellung grafisch aufbereitet ausgeben. Diese Informationen können abhängig von Informationen über eine Laserleistung, Wellenlänge des Umschaltsignals und den Eigenschaften des Farbstoffs ermittelt werden. Alternativ oder zusätzlich können bei Ausführungsbeispielen Information über ein Bleichen oder eine Fotoschädigung der Probe ausgegeben werden.

Bei weiteren Ausführungsbeispielen kann der Einfluss von Parameteränderungen an tatsächlichen Daten veranschaulicht werden. Beispielsweise kann eine Vorschaudarstellung generiert werden, die über eine grafische Benutzeroberfläche ausgegeben wird.

Bei weiteren Ausführungsbeispielen kann ein mehrere Schritte umfassender Datenverarbeitungsprozess derart dokumentiert werden, dass Zwischenergebnisse der Datenverarbeitung in Form von Bilddaten protokolliert werden. Dazu können beispielsweise verschiedene Versionen der Bilddaten, die nach Verarbeitung mit einer unterschiedlichen Anzahl der Schritte des Datenverarbeitungsprozesses resultieren, grafisch dargestellt werden. Die Protokollierung kann anhand erfasster Rohdaten erfolgen. Alternativ können auch Beispieldaten eingesetzt werden, die in einem Speicher der Recheneinrichtung abgelegt sind.

Bei allen beschriebenen Ausführungsbeispielen kann die Ausgabe der Grafikdaten am Mikroskopsystem erfolgen, während ein Benutzer Werte für verschiedene Einstellgrößen festlegt, um eine Datenaufnahme oder Datenverarbeitung zu planen.

Während unter Bezugnahme auf Fig. 3-19 Ausführungsbeispiele beschrieben wurden, bei denen eine grafische Benutzeroberfläche Grafikdaten anzeigt, um dem Benutzer Informationen über die Bedeutung einer der Einstellgrößen zu liefern, wird, wie in den Ansprüchen 1 und 9 definiert, die Ausgabe von Grafikdaten bei jedem der Ausführungsbeispiele zeitsequentiell wiederholt. Auf diese Weise werden dem Benutzer nacheinander Informationen über die Bedeutung verschiedener Einstellgrößen für das zugrundeliegende Verfahren geliefert.

## Patentansprüche

1. Mikroskopsystem, umfassend
ein Mikroskop (5-11; 11, 22-26) zur Datenaufnahme, wobei das Mikroskop (5-11; 11, 22-26) zur Durchführung eines Mikroskopieverfahrens unter Einsatz einer strukturierten Beleuchtung oder eines Mikroskopieverfahrens unter Verwendung optisch aktivierbarer oder optisch schaltbarer Moleküle eingerichtet ist und wenigstens eine steuerbare Komponente (5; 23) umfasst,
eine Recheneinrichtung (2), die eingerichtet ist, um die wenigstens eine steuerbare Komponente (5; 23) des Mikroskops (5-11; 11, 22-26) bei der Datenaufnahme zu steuern und um von dem Mikroskop (5-11; 11, 22-26) bereitgestellte Rohdaten zu verarbeiten, und
eine optische Ausgabeeinrichtung (3), die mit der Recheneinrichtung (2) gekoppelt ist,
wobei das Mikroskop (5-11; 11, 22-26) und die Recheneinrichtung (2) eingerichtet sind, um die Datenaufnahme abhängig von für eine Mehrzahl von Einstellgrößen jeweils eingestellten Werte durchzuführen, und
wobei die Recheneinrichtung (2) eingerichtet ist, um abhängig von einer benutzerdefiniert ausgewählten Einstellgröße der Mehrzahl von Einstellgrößen selektiv Grafikdaten (16; 35; 43; 45; 63; 80; 91, 92; 96; 105; 115; 125) über die optische Ausgabeeinrichtung (3) auszugeben,
wobei die Grafikdaten (16; 35; 43; 45; 63; 80; 91, 92; 96; 105; 115; 125) der ausgewählten Einstellgröße zugeordnet sind und einen Einfluss der ausgewählten Einstellgröße auf wenigstens einen Schritt einer Prozedur, die der Datenaufnahme und/oder Datenverarbeitung zugrunde liegt, repräsentieren, wobei das Mikroskopsystem so eingerichtet ist, dass eine Ausgabe der Grafikdaten abhängig davon erfolgt, welche Einstellgröße ein Benutzer gerade für eine Veränderung des zugeordneten Werts ausgewählt hat, oder abhängig von einer spezifischen Anforderung von Informationen über eine bestimmte Einstellgröße durch den Benutzer, und
wobei für eine Durchführung des Mikroskopieverfahrens unter Einsatz einer strukturierten Beleuchtung wenigstens eine der Einstellgrößen, die zum Ausgeben der zugeordneten Grafikdaten (16; 35; 43; 45; 91, 92; 96) auswählbar ist, in einer Gruppe enthalten ist, welche eine Periodizität eines Beleuchtungsmusters, eine Anzahl unterschiedlicher Orientierungen des Beleuchtungsmusters und eine Filterfunktion zur Filterung aufgenommener Rohdaten umfasst, und/oder für eine Durchführung eines Mikroskopieverfahrens unter Verwendung optisch aktivierbarer oder optisch schaltbarer Moleküle wenigstens eine der Einstellgrößen, die zum Ausgeben der zugeordneten Grafikdaten (63; 80; 105; 115; 125) auswählbar ist, in einer Gruppe enthalten ist, welche eine Maskengröße für einen Fitvorgang, ein Spektrum eines Umschaltsignals, eine Intensität des Umschaltsignals, ein Spektrum eines Anregungssignals und eine Intensität eines Anregungssignals umfasst,
**dadurch gekennzeichnet, dass** die Recheneinrichtung (2) eingerichtet ist, um zeitsequentiell für mehrere unterschiedliche der Einstellgrößen abhängig von einem für die ausgewählte Einstellgröße eingestellten Wert jeweils zugeordnete Grafikdaten (16; 35; 43; 45; 63; 80; 91, 92; 96; 105; 115; 125) über die optische Ausgabeeinrichtung (3) auszugeben.

2. Mikroskopsystem nach einem der vorhergehenden Ansprüche,
wobei die Recheneinrichtung (2) eingerichtet ist, um aus einer Mehrzahl von bei der Datenaufnahme gewonnenen zweidimensionalen Aufnahmen rechnerisch Bilddaten zu ermitteln,
wobei die Recheneinrichtung (2) eingerichtet ist, um für wenigstens eine auswählbare Einstellgröße Grafikdaten (16; 43; 45; 63; 91, 92; 96; 105; 115; 125) über die optische Ausgabeeinrichtung (3) auszugeben, die den Einfluss dieser Einstellgröße auf eine der Datenverarbeitung zugrundeliegende Prozedur repräsentieren.

3. Mikroskopsystem nach Anspruch 1 oder 2,
wobei die Recheneinrichtung (2) mit einer Eingabeeinrichtung (4; 32, 34; 42; 62; 82, 84; 94; 102, 104; 122) gekoppelt und eingerichtet ist, um eine Einstellgröße, deren Wert über die Eingabeeinrichtung (4; 32, 34; 42; 62; 82, 84; 94; 102, 104; 122) eingestellt wird, automatisch als die ausgewählte Einstellgröße festzulegen, für die die zugeordneten Grafikdaten (16; 35; 43; 45; 63; 80; 91, 92; 96; 105; 115; 125) auszugeben sind.

4. Mikroskopsystem nach einem der vorhergehenden Ansprüche,
wobei die Recheneinrichtung (2) eingerichtet ist, um die Grafikdaten (16; 35; 43; 45; 63; 80; 91, 92; 96; 105; 115; 125) weiterhin abhängig von einem für eine von der ausgewählten Einstellgröße verschiedene Einstellgröße eingestellten Wert auszugeben.

5. Mikroskopsystem nach einem der vorhergehenden Ansprüche,
wobei die Recheneinrichtung (2) eingerichtet ist, um Grafikdaten (16; 35; 43; 45; 63; 80; 91, 92; 96; 105; 115; 125), die von erfassten Rohdaten unabhängig sind, für wenigstens eine benutzerdefiniert ausgewählte Einstellgröße vor der Datenaufnahme auszugeben.

6. Mikroskopsystem nach Anspruch 5,
wobei das Mikroskopsystem (1) zur Durchführung eines Mikroskopieverfahrens unter Verwendung optisch aktivierbarer oder optisch schaltbarer Moleküle eingerichtet ist, wobei die Recheneinrichtung (2) eingerichtet ist, um Besetzungswahrscheinlichkeiten von Molekülzuständen und/oder Übergangsraten zwischen Molekülzuständen der optisch aktivierbaren oder optisch schaltbaren Moleküle automatisch zu ermitteln und um die Grafikdaten (105; 115; 125) vor der Datenaufnahme derart zu erzeugen, dass sie einen Einfluss einer Laserleistung und/oder eines Laserspektrums auf die Besetzungswahrscheinlichkeiten und/oder Übergangsraten repräsentieren.

7. Mikroskopsystem nach einem der vorhergehenden Ansprüche,
wobei die Recheneinrichtung (2) eingerichtet ist, um Grafikdaten (16; 35; 43; 45; 63; 80; 91, 92; 96) für wenigstens eine benutzerdefiniert ausgewählte Einstellgröße nach der Datenaufnahme auszugeben,
wobei die Recheneinrichtung (2) eingerichtet ist, um zusätzlich zu den der ausgewählten Einstellgröße zugeordneten Grafikdaten (16; 35; 43; 45; 63; 80; 91, 92; 96) über die Ausgabeeinrichtung (3) weitere grafische Informationen (44) auszugeben, die abhängig von bei der Datenaufnahme erfassten Rohdaten erzeugt werden.

8. Mikroskopsystem nach einem der vorhergehenden Ansprüche,
wobei das Mikroskopsystem (1) zur Durchführung eines Mikroskopieverfahrens unter Verwendung optisch aktivierbarer oder optisch schaltbarer Moleküle eingerichtet ist,
wobei das Mikroskop (5-11) eingerichtet ist, um die Datenaufnahme für mehrere beabstandete Objektebenen (72, 73) durchzuführen,
wobei das Mikroskop (5-11) steuerbar ist, um eine Lage der Objektebenen (72, 73) einzustellen, und
wobei die Recheneinrichtung (2) eingerichtet ist, um Grafikdaten (80) auszugeben, die einen Einfluss der Lage der Objektebenen (72, 73) auf eine Größe eines Messbereichs (88) und/oder eine erreichbare Auflösung (89) repräsentieren.

9. Mikroskopieverfahren, welches unter Einsatz einer strukturierten Beleuchtung oder oder unter Verwendung optisch aktivierbarer oder optisch schaltbarer Moleküle durchgeführt wird und bei dem in einer eine Mehrzahl von Schritten umfassenden Prozedur Rohdaten erfasst und anschließend rechnerisch verarbeitet werden, wobei eine Datenaufnahme abhängig von für eine Mehrzahl von Einstellgrößen eingestellten Werte durchgeführt wird,
wobei abhängig von einer benutzerdefiniert ausgewählten Einstellgröße der Mehrzahl von Einstellgrößen selektiv Grafikdaten (16; 35; 43; 45; 63; 80; 91, 92; 96; 105; 115; 125) über eine optische Ausgabeeinrichtung (3) ausgegeben werden,
wobei die Grafikdaten (16; 35; 43; 45; 63; 80; 91, 92; 96; 105; 115; 125) der ausgewählten Einstellgröße zugeordnet sind und einen Einfluss der ausgewählten Einstellgröße auf wenigstens einen Schritt der Prozedur, die der Datenaufnahme und/oder Datenverarbeitung zugrunde liegt, repräsentieren wobei eine Ausgabe der Grafikdaten abhängig davon erfolgt, welche Einstellgröße ein Benutzer gerade für eine Veränderung des zugeordneten Werts ausgewählt hat, oder abhängig von einer spezifischen Anforderung von Informationen über eine bestimmte Einstellgröße durch den Benutzer, und
wobei für die Durchführung des Mikroskopieverfahrens unter Einsatz einer strukturierten Beleuchtung wenigstens eine der Einstellgrößen, die zum Ausgeben der zugeordneten Grafikdaten (16; 35; 43; 45; 91, 92; 96) auswählbar ist, in einer Gruppe enthalten ist, welche eine Periodizität eines Beleuchtungsmusters, eine Anzahl unterschiedlicher Orientierungen des Beleuchtungsmusters und eine Filterfunktion zur Filterung aufgenommener Rohdaten umfasst, und/oder für eine Durchführung eines Mikroskopieverfahrens unter Verwendung optisch aktivierbarer oder optisch schaltbarer Moleküle wenigstens eine der Einstellgrößen, die zum Ausgeben der zugeordneten Grafikdaten (63; 80; 105; 115; 125) auswählbar ist, in einer Gruppe enthalten ist, welche eine Maskengröße für einen Fitvorgang, ein Spektrum eines Umschaltsignals, eine Intensität des Umschaltsignals, ein Spektrum eines Anregungssignals und eine Intensität eines Anregungssignals umfasst,
**dadurch gekennzeichnet, dass** zeitsequentiell für mehrere unterschiedliche der Einstellgrößen abhängig von einem für die ausgewählte Einstellgröße eingestellten Wert jeweils zugeordnete Grafikdaten (16; 35; 43; 45; 63; 80; 91, 92; 96; 105; 115; 125) über die optische Ausgabeeinrichtung (3) ausgegeben werden.

10. Computerprogrammprodukt, umfassend eine Folge von darauf gespeicherten Steuerbefehlen, die bei Ausführung durch die Recheneinrichtung (2) des Mikroskopsystems gemäß einem der Ansprüche 1-8 (1; 21) das eben genannte Mikroskopsystem (1; 21) zur Durchführung des Verfahrens nach Anspruch 9 veranlassen.

## Claims

1. Microscope system, comprising
a microscope (5-11; 11, 22-26) for recording data, wherein the microscope (5-11; 11, 22-26) is configured to perform a microscopy method using structured illumination or a microscopy method using optically activatable or optically switchable molecules and comprises at least one controllable component (5; 23),
a computing device (2) configured to control the at least one controllable component (5; 23) of the microscope (5-11; 11, 22-26) when recording data and to process raw data provided by the microscope (5-11; 11, 22-26), and an optical output device (3) coupled to the computing device (2),
wherein the microscope (5-11; 11, 22-26) and the computing device (2) are configured to perform the recording of data on the basis of respective values set for a plurality of setting parameters, and
wherein the computing device (2) is configured to selectively output graphics data (16; 35; 43; 45; 63; 80; 91, 92; 96; 105; 115; 125) via the optical output device (3) on the basis of a setting parameter of the plurality of setting parameters selected in user-defined fashion, wherein the graphics data (16; 35; 43; 45; 63; 80; 91, 92; 96; 105; 115; 125) are assigned to the selected setting parameter and represent an influence of the selected setting parameter on at least one step of a procedure underlying the recording of data and/or the processing of data, wherein the microscope system is configured such that an output of the graphics data is implemented on the basis of the setting parameter a user has currently selected for a modification of the assigned value or on the basis of a specific demand for pieces of information about a specific setting parameter by the user, and
wherein, for performing the microscopy method using structured illumination, at least one of the setting parameters selectable for the output of the assigned graphics data (16; 35; 43; 45; 91, 92; 96) is contained in a group comprising a periodicity of an illumination pattern, a number of different orientations of the illumination pattern and a filter function for filtering recorded raw data, and/or, for performing a microscopy method using optically activatable or optically switchable molecules, at least one of the setting parameters selectable for the output of the assigned graphics data (63; 80; 105; 115; 125) is contained in a group comprising a mask dimension for a fitting procedure, a spectrum of a switching signal, an intensity of the switching signal, a spectrum of an excitation signal and an intensity of an excitation signal,
**characterized in that** the computing device (2) is configured to output, sequentially in time and via the optical output device (3), respectively assigned graphics data (16; 35; 43; 45; 63; 80; 91, 92; 96; 105; 115; 125) for a plurality of different setting parameters on the basis of a value set for the selected setting parameter.

2. Microscope system according to any of the preceding claims,
wherein the computing device (2) is configured to computationally ascertain image data from a plurality of two-dimensional recordings obtained when recording data, wherein the computing device (2) is configured to output, for at least one selectable setting parameter and via the optical output device (3), graphics data (16; 43; 45; 63; 91, 92; 96; 105; 115; 125) representing the influence of this setting parameter on a procedure underlying the data processing.

3. Microscope system according to Claim 1 or 2,
wherein the computing device (2) is coupled to an input device (4; 32, 34; 42; 62; 82, 84; 94; 102, 104; 122) and configured to automatically define a setting parameter whose value is set via the input device (4; 32, 34; 42; 62; 82, 84; 94; 102, 104; 122) as the selected setting parameter, for which the assigned graphics data (16; 35; 43; 45; 63; 80; 91, 92; 96; 105; 115; 125) should be output.

4. Microscope system according to any of the preceding claims,
wherein the computing device (2) is configured to output the graphics data (16; 35; 43; 45; 63; 80; 91, 92; 96; 105; 115; 125) also on the basis of a value set for a setting parameter that differs from the selected setting parameter.

5. Microscope system according to any of the preceding claims,
wherein the computing device (2) is configured to output, before data is recorded, graphics data (16; 35; 43; 45; 63; 80; 91, 92; 96; 105; 115; 125), which are independent of the acquired raw data, for at least one setting parameter selected in user-defined fashion.

6. Microscope system according to Claim 5,
wherein the microscope system (1) is configured to perform a microscopy method using optically activatable or optically switchable molecules, wherein the computing device (2) is configured to automatically ascertain occupancy probabilities of molecule states and/or transition rates between molecule states of the optically activatable or optically switchable molecules and to generate the graphics data (105; 115; 125) prior to the data being recorded, in such a way that said graphics data represent an influence of a laser power and/or a laser spectrum on the occupancy probabilities and/or transition rates.

7. Microscope system according to any of the preceding claims,
wherein the computing device (2) is configured to output, after data has been recorded, graphics data (16; 35; 43; 45; 63; 80; 91, 92; 96) for at least one setting parameter selected in user-defined fashion,
wherein the computing device (2) is configured to output further graphical pieces of information (44), which are generated on the basis of raw data acquired when data is recorded, via the output device (3) in addition to the graphics data (16; 35; 43; 45; 63; 80; 91, 92; 96) assigned to the selected setting parameter.

8. Microscope system according to any of the preceding claims,
wherein the microscope system (1) is configured to perform a microscopy method using optically activatable or optically switchable molecules,
wherein the microscope (5-11) is configured to perform the recording of data for a plurality of spaced-apart object planes (72, 73),
wherein the microscope (5-11) is controllable to set a relative position of the object planes (72, 73), and
wherein the computing device (2) is configured to output graphics data (80) representing an influence of the relative position of the object planes (72, 73) on a size of a measurement region (88) and/or an achievable resolution (89).

9. Microscopy method, performed using structured illumination or using optically activatable or optically switchable molecules, in which raw data are acquired in a procedure comprising a plurality of steps and said raw data are subsequently processed by calculation, wherein recording of data is performed on the basis of values set for a plurality of setting parameters,
wherein graphics data (16; 35; 43; 45; 63; 80; 91, 92; 96; 105; 115; 125) are selectively output via an optical output device (3) on the basis of a setting parameter of the plurality of setting parameters selected in user-defined fashion,
wherein the graphics data (16; 35; 43; 45; 63; 80; 91, 92; 96; 105; 115; 125) are assigned to the selected setting parameter and represent an influence of the selected setting parameter on at least one step of the procedure underlying the recording of data and/or the processing of data, wherein graphics data are output on the basis of the setting parameter a user has currently selected for a modification of the assigned value and/or on the basis of a specific demand for pieces of information about a specific setting parameter by the user, and
wherein, for performing the microscopy method using structured illumination, at least one of the setting parameters selectable for the output of the assigned graphics data (16; 35; 43; 45; 91, 92; 96) is contained in a group comprising a periodicity of an illumination pattern, a number of different orientations of the illumination pattern and a filter function for filtering recorded raw data, and/or, for performing a microscopy method using optically activatable or optical switchable molecules, at least one of the setting parameters selectable for the output of the assigned graphics data (63; 80; 105; 115; 125) is contained in a group comprising a mask dimension for a fitting procedure, a spectrum of a switching signal, an intensity of the switching signal, a spectrum of an excitation signal and an intensity of an excitation signal,
**characterized in that**, sequentially in time and via the optical output device (3), respectively assigned graphics data (16; 35; 43; 45; 63; 80; 91, 92; 96; 105; 115; 125) for a plurality of different setting parameters are output on the basis of a value set for the selected setting parameter.

10. Computer program product comprising a sequence of control commands stored therein, which, when executed by the computing device (2) of the microscope system according to any of Claims 1-8 (1; 21), prompt the aforementioned microscope system (1; 21) to perform the method according to Claim 9.

## Revendications

1. Système de microscope, comprenant
un microscope (5-11 ; 11, 22-26) destiné à acquérir des données, dans lequel le microscope (5-11 ; 11, 22-26) est conçu pour mettre en œuvre un procédé de microscopie au moyen d'un éclairage structuré ou un procédé de microscopie en utilisant des molécules optiquement activables ou optiquement commutables et comprend au moins un composant pouvant être commandé (5 ; 23),
un dispositif de calcul (2) conçu pour commander l'au moins un composant commandable (5 ; 23) du microscope (5-11 ; 11, 22-26) lors de l'acquisition de données et pour traiter des données brutes fournies par le microscope (5-11 ; 1, 22-26), et
un dispositif de sortie optique (3) couplé au dispositif de calcul (2),
dans lequel le microscope (5-11 ; 11, 22-26) et le dispositif de calcul (2) sont conçus pour effectuer l'acquisition de données en fonction de valeurs respectivement réglées pour une pluralité de grandeurs de réglage, et
dans lequel le dispositif de calcul (2) est conçu pour délivrer sélectivement des données graphiques (16 ; 35 ; 43 ; 45 ; 63 ; 80 ; 91, 92 ; 96 ; 105 ; 115 ; 125) par l'intermédiaire du dispositif de sortie optique (3) en fonction d'une grandeur de réglage sélectionnée de manière définie par l'utilisateur parmi la pluralité de grandeurs de réglage,
dans lequel les données graphiques (16 ; 35 ; 43 ; 45 ; 63 ; 80 ; 91, 92 ; 96 ; 105 ; 15 ; 125) sont associées à la grandeur de réglage sélectionnée et représentent une influence de la grandeur de réglage sélectionnée sur au moins une étape d'une procédure sur laquelle se fonde l'acquisition de données et/ou le traitement de données, dans lequel le système de microscope est conçu de telle sorte qu'une sortie des données graphiques soit effectuée en fonction de la grandeur de réglage qu'un utilisateur vient de sélectionner en vue d'une modification de la valeur associée, ou en fonction d'une demande spécifique d'informations concernant une grandeur de réglage particulière par l'utilisateur, et
dans lequel, pour une mise en œuvre du procédé de microscopie au moyen d'un éclairage structuré, au moins l'une des grandeurs de réglage, qui peut être sélectionnée pour délivrer les données graphiques associées (16 ; 35 ; 43 ; 45 ; 91, 92 ; 96), est contenue dans un groupe comprenant une périodicité d'un motif d'éclairage, un nombre d'orientations différentes du motif d'éclairage et une fonction de filtrage destinée à filtrer des données brutes acquises, et/ou pour une mise en œuvre d'un procédé de microscopie en utilisant des molécules optiquement activables ou optiquement commutables, au moins l'une des grandeurs de réglage qui peut être sélectionnée pour délivrer les données graphiques associées (63 ; 80 ; 105 ; 115 ; 125) est contenue dans un groupe comprenant une taille de masque pour une opération d'ajustement, un spectre d'un signal de commutation, une intensité du signal de commutation, un spectre d'un signal d'excitation et une intensité d'un signal d'excitation,
**caractérisé en ce que** le dispositif de calcul (2) est conçu pour délivrer séquentiellement dans le temps des données graphiques (16 ; 35 ; 43 ; 45 ; 63 ; 80 ; 91, 92 ; 96 ; 105 ; 15 ; 125) respectivement associées, pour plusieurs grandeurs différentes parmi les grandeurs de réglage, en fonction d'une valeur réglée pour la grandeur de réglage sélectionnée, par l'intermédiaire du dispositif de sortie optique (3).

2. Système de microscope selon l'une des revendications précédentes,
dans lequel le dispositif de calcul (2) est conçu pour déterminer par calcul des données d'image à partir d'une pluralité d'acquisitions bidimensionnelles obtenues lors de l'acquisition de données,
dans lequel le dispositif de calcul (2) est conçu pour délivrer, pour au moins une grandeur de réglage sélectionnable, des données graphiques (16 ; 43 ; 45 ; 63 ; 91, 92 ; 96 ; 105 ; 115 ; 125) par l'intermédiaire du dispositif de sortie optique (3), lesquelles représentent l'influence de ladite grandeur de réglage sur une procédure sur laquelle se fonde le traitement de données.

3. Système de microscope selon la revendication 1 ou 2,
dans lequel le dispositif de calcul (2) est couplé à un dispositif d'entrée (4 ; 32, 34 ; 42 ; 62 ; 82, 84 ; 94 ; 102, 104 ; 122) et est conçu pour définir automatiquement une grandeur de réglage, dont la valeur est réglée par l'intermédiaire du dispositif d'entrée (4 ; 32, 34 ; 42 ; 62 ; 82, 84 ; 94 ; 102, 104 ; 122), comme étant la grandeur de réglage sélectionnée pour laquelle les données graphiques associées (16 ; 35 ; 43 ; 45 ; 63 ; 80 ; 91, 92 ; 96 ; 105 ; 15 ; 125) doivent être délivrées.

4. Système de microscope selon l'une des revendications précédentes,
dans lequel le dispositif de calcul (2) est conçu pour délivrer en outre les données graphiques (16 ; 35 ; 43 ; 45 ; 63 ; 80 ; 91, 92 ; 96 ; 105 ; 15 ; 125) en fonction d'une valeur réglée pour une grandeur de réglage différente de la grandeur de réglage sélectionnée.

5. Système de microscope selon l'une des revendications précédentes,
dans lequel le dispositif de calcul (2) est conçu pour délivrer des données graphiques (16 ; 35 ; 43 ; 45 ; 63 ; 80 ; 91, 92 ; 96 ; 105 ; 115 ; 125) indépendantes des données brutes détectées pour au moins une grandeur de réglage sélectionnée de manière définie par l'utilisateur avant l'acquisition de données.

6. Système de microscope selon la revendication 5,
dans lequel le système de microscope (1) est conçu pour mettre en œuvre un procédé de microscopie en utilisant des molécules optiquement activables ou optiquement commutables, dans lequel le dispositif de calcul (2) est conçu pour déterminer automatiquement des probabilités d'occupation d'états moléculaires et/ou des taux de transition entre des états moléculaires des molécules optiquement activables ou optiquement commutables, et pour générer les données graphiques (105 ; 115 ; 125) avant l'acquisition de données de telle sorte qu'elles représentent une influence d'une puissance laser et/ou d'un spectre laser sur les probabilités d'occupation et/ou les taux de transition.

7. Système de microscope selon l'une des revendications précédentes,
dans lequel le dispositif de calcul (2) est conçu pour délivrer des données graphiques (16 ; 35 ; 43 ; 45 ; 63 ; 80 ; 91, 92 ; 96) pour au moins une grandeur de réglage sélectionnée de manière définie par l'utilisateur après l'acquisition de données,
dans lequel le dispositif de calcul (2) est conçu pour délivrer par l'intermédiaire du dispositif de sortie (3), en plus des données graphiques (16 ; 35 ; 43 ; 45 ; 63 ; 80 ; 91, 92 ; 96) associées à la grandeur de réglage sélectionnée, d'autres informations graphiques (44) générées en fonction de données brutes détectées lors de l'acquisition de données.

8. Système de microscope selon l'une des revendications précédentes,
dans lequel le système de microscope (1) est conçu pour mettre en œuvre un procédé de microscopie en utilisant des molécules optiquement activables ou optiquement commutables,
dans lequel le microscope (5-11) est conçu pour effectuer l'acquisition de données pour une pluralité de plans objets espacés (72, 73),
dans lequel le microscope (5-11) peut être commandé pour régler une position des plans objets (72, 73), et
dans lequel le dispositif de calcul (2) est conçu pour délivrer des données graphiques (80) représentant une influence de la position des plans objets (72, 73) sur une taille d'une plage de mesure (88) et/ou une résolution atteignable (89).

9. Procédé de microscopie qui est mis en œuvre au moyen d'un éclairage structuré ou en utilisant des molécules optiquement activables ou optiquement commutables et dans lequel des données brutes sont acquises lors d'une procédure comprenant une pluralité d'étapes et sont ensuite traitées par calcul, dans lequel une acquisition de données est effectuée en fonction de valeurs réglées pour une pluralité de grandeurs de réglage,
dans lequel des données graphiques (16 ; 35 ; 43 ; 45 ; 63 ; 80 ; 91, 92 ; 96 ; 105 ; 115 ; 125) sont délivrées sélectivement par l'intermédiaire d'un dispositif de sortie optique (3) en fonction d'une grandeur de réglage sélectionnée de manière définie par l'utilisateur parmi la pluralité de grandeurs de réglage,
dans lequel les données graphiques (16 ; 35 ; 43 ; 45 ; 63 ; 80 ; 91, 92 ; 96 ; 105 ; 15 ; 125) sont associées à la grandeur de réglage sélectionnée et représentent une influence de la grandeur de réglage sélectionnée sur au moins une étape de la procédure qui sur laquelle se fonde l'acquisition de données et/ou le traitement de données,
dans lequel une sortie des données graphiques est effectuée en fonction de la grandeur de réglage qu'un utilisateur vient de sélectionner en vue d'une modification de la valeur associée, ou en fonction d'une demande spécifique d'informations concernant une grandeur de réglage particulière par l'utilisateur, et
dans lequel, pour la mise en œuvre du procédé de microscopie au moyen d'un éclairage structuré, au moins l'une des grandeurs de réglage, qui peut être sélectionnée pour délivrer les données graphiques associées (16 ; 35 ; 43 ; 45 ; 91, 92 ; 96), est contenue dans un groupe comprenant une périodicité d'un motif d'éclairage, un nombre d'orientations différentes du motif d'éclairage et une fonction de filtrage destinée à filtrer des données brutes acquises, et/ou pour une mise en œuvre d'un procédé de microscopie en utilisant des molécules optiquement activables ou optiquement commutables, au moins l'une des grandeurs de réglage qui peut être sélectionnée pour délivrer les données graphiques associées (63 ; 80 ; 105 ; 15 ; 125) est contenue dans un groupe comprenant une taille de masque pour une opération d'ajustement, un spectre d'un signal de commutation, une intensité du signal de commutation, un spectre d'un signal d'excitation et une intensité d'un signal d'excitation,
**caractérisé en ce que** des données graphiques (16 ; 35 ; 43 ; 45 ; 63 ; 80 ; 91, 92 ; 96 ; 105 ; 15 ; 125) respectivement associées sont délivrées séquentiellement dans le temps pour plusieurs grandeurs différentes parmi les grandeurs de réglage, en fonction d'une valeur réglée pour la grandeur de réglage sélectionnée, par l'intermédiaire du dispositif de sortie optique (3).

10. Produit de programme informatique comprenant une séquence d'instructions de commande qui y sont stockées et qui, lorsqu'elles sont exécutées par le dispositif de calcul (2) du système de microscope (1 ; 21) selon l'une des revendications 1 à 8, amènent ledit système de microscope (1 ; 21) à mettre en œuvre le procédé selon la revendication 9.
